(19) Europäisches Patentamt
European Patent Office
Office européen des brevets

(11) EP 3 818 420 B1

(12) **EUROPÄISCHE PATENTSCHRIFT**

(45) Veröffentlichungstag und Bekanntmachung des Hinweises auf die Patenterteilung:
**29.12.2021 Patentblatt 2021/52**

(21) Anmeldenummer: **19774065.7**

(22) Anmeldetag: **05.09.2019**

(51) Int Cl.:
***G05B 19/416*** *(2006.01)*

(86) Internationale Anmeldenummer:
**PCT/EP2019/073717**

(87) Internationale Veröffentlichungsnummer:
**WO 2020/053065 (19.03.2020 Gazette 2020/12)**

(54) **ZEITOPTIMIERTE BEWEGUNGSFÜHRUNG ZWISCHEN BAHNABSCHNITTEN**

TIME-OPTIMIZED GUIDANCE OF MOVEMENT BETWEEN RAIL SECTIONS

GUIDAGE DE DÉPLACEMENT OPTIMISÉ DANS LE TEMPS ENTRE DES SECTIONS FERROVIAIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.09.2018 EP 18194060**

(43) Veröffentlichungstag der Anmeldung:
**12.05.2021 Patentblatt 2021/19**

(73) Patentinhaber: **Siemens Aktiengesellschaft**
**80333 München (DE)**

(72) Erfinder: **SCHNEIDER, Rene**
**09569 Oederan (DE)**

(56) Entgegenhaltungen:
**DE-A1-102009 024 130**
**DE-A1-102010 013 525**
**DE-A1-102010 025 271**
**US-A1- 2016 274 566**

- **Haschke R, Weitnauer E, Ritter H.: "On-Line Planning of Time-Optimal, Jerk-Limited Trajectories", Universität Bielefeld (Preprint) Int. Conf. on Intelligent Robots and Systems, 22. September 2008 (2008-09-22), XP002789776, Universität Bielefeld Gefunden im Internet: URL:https://ni.www.techfak.uni-bielefeld.de/files/HaschkeWeitnauerRitter08-OPT.pdf [gefunden am 2019-03-15] in der Anmeldung erwähnt**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die vorliegende Erfindung geht aus von einem Betriebsverfahren für eine Maschine, die eine Mehrzahl von lagegeregelten Achsen aufweist, die in ihrer Gesamtheit eine Verfahrbewegung eines ersten Elements der Maschine relativ zu einem zweiten Element der Maschine bewirken,

- wobei die Steuereinrichtung die Achsen der Maschine derart ansteuert, dass das erste Element der Maschine relativ zu dem zweiten Element der Maschine sequenziell nacheinander mehrere vorbestimmte Bahnabschnitte mit einem für den jeweiligen Bahnabschnitt definierten jeweiligen Geschwindigkeitsverlauf und einem für den jeweiligen Bahnabschnitt durch den jeweiligen Geschwindigkeitsverlauf definierten jeweiligen Beschleunigungsverlauf abfährt,
- wobei die Bahnabschnitte jeweils einen Anfang und ein Ende aufweisen und das Ende eines jeweiligen Bahnabschnitts und der Anfang des jeweils unmittelbar nachfolgenden Bahnabschnitts sich in der Lage mindestens einer der lagegeregelten Achsen unterscheiden.

Die vorliegende Erfindung geht weiterhin aus von einem Steuerprogramm für eine Steuereinrichtung, wobei das Steuerprogramm Maschinencode aufweist, der von der Steuereinrichtung abarbeitbar ist, wobei die Abarbeitung des Maschinencodes durch die Steuereinrichtung bewirkt, dass die Steuereinrichtung eine Maschine, die eine Mehrzahl von lagegeregelten Achsen aufweist, die in ihrer Gesamtheit eine Verfahrbewegung eines ersten Elements der Maschine relativ zu einem zweiten Element der Maschine bewirken, gemäß einem derartigen Betriebsverfahren steuert.

Die vorliegende Erfindung geht weiterhin aus von einer Steuereinrichtung für eine Maschine, die eine Mehrzahl von lagegeregelten Achsen aufweist, die in ihrer Gesamtheit eine Verfahrbewegung eines ersten Elements der Maschine relativ zu einem zweiten Element der Maschine bewirken, wobei die Steuereinrichtung mit einem derartigen Steuerprogramm programmiert ist, so dass die Steuereinrichtung die Maschine gemäß einem derartigen Betriebsverfahren steuert.

Die vorliegende Erfindung geht weiterhin aus von einer Maschine, die eine Mehrzahl von lagegeregelten Achsen aufweist, die in ihrer Gesamtheit eine Verfahrbewegung eines ersten Elements der Maschine relativ zu einem zweiten Element der Maschine bewirken, wobei die Maschine eine derartige Steuereinrichtung aufweist, welche die Achsen der Maschine gemäß einem derartigen Betriebsverfahren steuert.

Bei Werkzeugmaschinen und anderen Produktionsmaschinen sind neben den sogenannten produktiven Wegabschnitten, bei denen die Maschine ihre eigentliche technologische Aufgabe ausführt - beispielsweise das Werkzeug relativ zu einem Werkstück eine Bearbeitung durchführt -, auch andere, nichtproduktive Wegabschnitte vorhanden. Derartige Wegabschnitte sind beispielsweise bei einer Werkzeugmaschine Anfahrbewegungen, Abfahrbewegungen und Umsetzbewegungen zwischen produktiven Wegabschnitten, Werkzeugwechsel, Werkstückwechsel, Kalibrierungsfahrten und andere mehr. Da die Zeit für derartige Bewegungen nicht produktiv ist, sollten derartige Zeiten so kurz wie möglich gehalten werden, also zeitoptimal sein.

In dem Fachaufsatz "On-Line Planning of Time-Optimal, Jerk-Limited Trajectories" von Robert Haschke et al., abgerufen am 17.08.2018 unter dem Link https://ni.www.techfak.uni-biele-feld.de/files/HaschkeWeitnauerRitter08-OPT.pdf, ist bekannt, online eine zeitoptimale, ruckbegrenzte Bewegung zu ermitteln. Die Startbedingungen der Bewegung können bezüglich Ort, Geschwindigkeit und Beschleunigung vorgegeben werden. Am Ende der ermittelten Bewegung müssen jedoch sowohl die Beschleunigung als auch die Geschwindigkeit den Wert 0 aufweisen. Die in dem Fachaufsatz erläuterte Vorgehensweise ist daher ungeeignet, bei Sequenz von aufeinanderfolgenden Bahnabschnitten, die jeweils mit einem für den jeweiligen Bahnabschnitt definierten Geschwindigkeitsverlauf und einem für den Bahnabschnitt durch den Geschwindigkeitsverlauf definierten Beschleunigungsverlauf abgefahren werden sollen, eine derart zeitoptimale Lösung zu ermitteln.

Aus der DE 10 2010 013 525 A1 ist bekannt, ein Werkstück rotatorisch und/oder linear von einer ersten Ruheposition in eine zweite Ruheposition zu überführen. Im Rahmen dieser Vorgehensweise erfolgt die Bewegung in mehreren Abschnitten, wobei die Abschnitte jeweils als Polynome höheren Grades der Zeit ausgebildet sind und die Abschnitte stetig und mehrfach zeitlich differenzierbar aneinander angrenzen. Sowohl am Anfang als auch am Ende der jeweiligen Verfahrbewegung weisen zumindest die Geschwindigkeit und die Beschleunigung den Wert 0 auf.

Aus der DE 10 2009 024 130 A1 ist bekannt, ein erstes Element einer Maschine relativ zu dem zweiten Element der Maschine von einem Anfangspunkt zu dem Endpunkt entlang einer vorgegebenen Bahn zu verfahren und zum Verfahren entlang dieser Bahn eine Bewegungsführung zu ermitteln, so dass diese Bahn zeitoptimal, in Ort, Geschwindigkeit und Beschleunigung stetig und in Geschwindigkeit, Beschleunigung und Ruck begrenzt abgefahren wird. Die Geschwindigkeiten am Anfangspunkt und am Endpunkt können vorgegeben sein. Die Beschleunigungen an diesen beiden Punkten sind 0.

Aus der DE 10 2010 025 271 A1 gehen ein Verfahren und eine Maschine zum Bestimmen einer Bahnkurve eines von einer zwei-oder mehrachsigen Maschine bewegbaren Objekts hervor, wobei die Bahnkurve von einer ersten Position, insbesondere Startposition, zu einer zweiten Position, insbesondere Zielposition, führt, wobei die Bahnkurve aus Abschnitten zusammengesetzt wird, wobei in einem ersten Schritt ein schnellstmögliches Durchfahren einer Horizontalbewegung bestimmt wird unter Einhaltung von Maximalwerten für Betrag der Geschwindigkeit, Betrag der Beschleunigung und Betrag des Rucks und daraus die Zeitdauer für die Horizontalbewegung bestimmt wird.

Die Aufgabe der vorliegenden Erfindung besteht darin, Möglichkeiten zu schaffen, mittels derer die Effizienz des Betriebs einer Maschine der eingangs genannten Art maximiert werden kann.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 7.

Erfindungsgemäß wird ein Betriebsverfahren der eingangs genannten Art dadurch ausgestaltet, dass der Steuereinrichtung für eine Bewegungsführung vom Ende eines jeweiligen Bahnabschnitts zum Anfang des jeweils unmittelbar nachfolgenden Bahnabschnitts zunächst nur das Ende des jeweiligen Bahnabschnitts und der Anfang des jeweils unmittelbar nachfolgenden Bahnabschnitts, nicht aber eine vom Ende eines jeweiligen Bahnabschnitts zum Anfang des jeweils unmittelbar nachfolgenden Bahnabschnitts abzufahrende Bahn bekannt sind, dass die Steuereinrichtung für die Achsen eine jeweilige endgültige Achsenführung ermittelt, dass die Gesamtheit der endgültigen Achsenführungen der Bewegungsführung entspricht und dass die endgültigen Achsenführungen derart aufeinander abgestimmt sind, dass die Bewegung des ersten Elements der Maschine relativ zu dem zweiten Element der Maschine innerhalb der ermittelten Bewegungsführung zeitoptimal, in Ort, Geschwindigkeit und Beschleunigung stetig und in Geschwindigkeit, Beschleunigung und Ruck begrenzt ist, am Ende des jeweiligen Bahnabschnitts stetig in Ort, Geschwindigkeit und Beschleunigung in die ermittelte Bewegungsführung übergeht und die ermittelte Bewegungsführung am Anfang des jeweils unmittelbar nachfolgenden Bahnabschnitts stetig in Ort, Geschwindigkeit und Beschleunigung in den jeweils unmittelbar nachfolgenden Bahnabschnitt übergeht, wobei die Steuereinrichtung (4) zum Ermitteln der Bewegungsführung

- zunächst für die Achsen (1) unabhängig voneinander eine jeweilige zeitoptimale, in Ort (x), Geschwindigkeit (v) und Beschleunigung (a) stetige und in Geschwindigkeit (v), Beschleunigung (a) und Ruck (r) begrenzte vorläufige Achsenführung (AF) vom Ende (E1) eines jeweiligen Bahnabschnitts (B1) zum Anfang (A2) des jeweils unmittelbar nachfolgenden Bahnabschnitts (B2) ermittelt, so dass - bezogen auf die jeweils betrachtete Achse (1) - die Bewegung des ersten Elements (2) der Maschine relativ zu dem zweiten Element (3) der Maschine am Ende (E1) des jeweiligen Bahnabschnitts (B1) stetig in Ort (x), Geschwindigkeit (v) und Beschleunigung (a) in die ermittelte vorläufige Achsenführung (AF) übergeht und die ermittelte vorläufige Achsenführung (AF) am Anfang (A2) des jeweils unmittelbar nachfolgenden Bahnabschnitts (B2) stetig in Ort (x), Geschwindigkeit (v) und Beschleunigung (a) in den jeweils unmittelbar nachfolgenden Bahnabschnitt (B2) übergeht,
- für die Achsen (1) die für die jeweilige vorläufige Achsenführung (AF) benötigte Achsenzeit (TA) ermittelt,
- die vorläufige Achsenführung (AF) mit der größten benötigten Achsenzeit (TAm) für diese Achse (1) unverändert als endgültige Achsenführung (AF') übernimmt,
- für die Achsen (1) mit einer kleineren als der größten benötigten Achsenzeit (TAm) die jeweilige vorläufige Achsenführung (AF) modifiziert, so dass die Stetigkeit in Ort (x), Geschwindigkeit (v) und Beschleunigung (a) erhalten bleibt und die zugehörige Achsenzeit (TA) mit der größten benötigten Achsenzeit (TAm) übereinstimmt, und die so ermittelten modifizierten Achsenführungen (AF) als endgültige Achsenführungen (AF') übernimmt.

Die Steuereinrichtung ermittelt also für die einzelnen Achsen der Maschine eine jeweilige Achsenführung, wobei die Achsenführungen in ihrer Gesamtheit mit der Bewegungsführung korrespondieren.

Da die Anzahl an Achsen größer als 1 ist, müssen die Achsenführungen derart koordiniert werden, dass die Achsen für ihre jeweilige Achsenführung gleichlange Zeiten benötigen. Dies kann beispielsweise dadurch gewährleistet werden, dass die Steuereinrichtung zum Ermitteln der Bewegungsführung

- zunächst für die Achsen unabhängig voneinander eine jeweilige zeitoptimale, in Ort, Geschwindigkeit und Beschleunigung stetige und in Geschwindigkeit, Beschleunigung und Ruck begrenzte vorläufige Achsenführung vom Ende eines jeweiligen Bahnabschnitts zum Anfang des jeweils unmittelbar nachfolgenden Bahnabschnitts ermittelt, so dass - bezogen auf die jeweils betrachtete Achse - die Bewegung des ersten Elements der Maschine relativ zu dem zweiten Element der Maschine am Ende des jeweiligen Bahnabschnitts stetig in Ort, Geschwindigkeit und Beschleunigung in die ermittelte vorläufige Achsenführung übergeht und die ermittelte vorläufige Achsenführung am Anfang des jeweils unmittelbar nachfolgenden Bahnabschnitts stetig in Ort, Geschwindigkeit und Beschleunigung in den jeweils unmittelbar nachfolgenden Bahnabschnitt übergeht,
- für die Achsen die für die jeweilige vorläufige Achsenführung benötigte Achsenzeit ermittelt,
- die vorläufige Achsenführung mit der größten benötigten Achsenzeit für diese Achse unverändert als endgültige Achsenführung übernimmt,
- für die Achsen mit einer kleineren als der größten benötigten Achsenzeit die jeweilige vorläufige Achsenführung modifiziert, so dass die Stetigkeit in Ort, Geschwindigkeit und Beschleunigung erhalten bleibt und die zugehörige Achsenzeit mit der größten benötigten Achsenzeit übereinstimmt, und die so ermittelten modifizierten Achsenführungen als endgültige Achsenführungen übernimmt.

Zum Modifizieren der jeweiligen vorläufigen Achsenführung kann die Steuereinrichtung beispielsweise den Betrag der Zielgeschwindigkeit reduzieren und basierend auf der betragsmäßig entsprechend reduzierten Zielgeschwindigkeit erneut die jeweilige vorläufige Achsenführung und die zugehörige Achsenzeit ermitteln, bis die zugehörige Achsenzeit mit der größten benötigten Achsenzeit übereinstimmt. Diese Vorgehensweise ist besonders zuverlässig und relativ einfach.

Um die jeweilige vorläufige Achsenführung auf einfache, zuverlässige und auch schnelle Weise ermitteln zu können, ist vorgesehen,

- dass die Steuereinrichtung zum Ermitteln der jeweiligen vorläufigen Achsenführung die jeweilige vorläufige Achsenführung in sieben unmittelbar aufeinanderfolgende Phasen unterteilt, wobei

  -- jede der aufeinanderfolgenden Phasen eine jeweilige zumindest nicht negative Zeitdauer aufweist,
  -- in der ersten Phase und in der siebten Phase der Ruck positiv oder negativ, betragsmäßig aber maximal ist,
  -- in der dritten Phase der Ruck invers zum Ruck in der ersten Phase ist und in der fünften Phase der Ruck invers zum Ruck in der siebten Phase ist,
  -- in der zweiten und sechsten Phase der Ruck 0 ist,
  -- in der vierten Phase der Ruck und die Beschleunigung 0 sind und
  -- die Geschwindigkeit in der vierten Phase die Zielgeschwindigkeit ist,

- dass die Steuereinrichtung die Zielgeschwindigkeit nacheinander zunächst mit positiven und negativen Vorzeichen auf den maximal zulässigen Wert setzt,
- dass die Steuereinrichtung für den jeweiligen Wert der Zielgeschwindigkeit

  -- die zugehörigen Abschnitte der jeweiligen vorläufigen Achsenführung für die erste, zweite und dritte Phase ermittelt, so dass am Ende der dritten Phase die Beschleunigung 0 ist und die Geschwindigkeit gleich der jeweiligen Zielgeschwindigkeit ist,
  -- die zugehörigen Abschnitte der jeweiligen vorläufigen Achsenführung für die fünfte, sechste und siebte Phase ermittelt, so dass am Anfang der fünften Phase die Beschleunigung 0 ist und die Geschwindigkeit gleich der jeweiligen Zielgeschwindigkeit ist,
  -- prüft, ob angesichts der ermittelten ersten bis dritten Phase und der ermittelten fünften bis siebten Phase eine theoretische Zeitdauer der vierten Phase größer als 0 oder gleich 0 ist,
  -- bejahendenfalls die Abschnitte der jeweiligen vorläufigen Achsenführung für die erste bis dritte und fünfte bis siebte Phase übernimmt und für die vierte Phase die ermittelte theoretische Zeitdauer als Zeitdauer übernimmt,
  -- verneinendenfalls die Zeitdauer der vierten Phase auf 0 setzt, so dass im Ergebnis die dritte Phase und die fünfte Phase unmittelbar aneinander angrenzen, und weiterhin den Betrag der Zielgeschwindigkeit reduziert und die Ermittlung der jeweiligen vorläufigen Achsenführung für erste, zweite und dritte Phase sowie für die fünfte, sechste und siebte Phase mit dem entsprechend modifizierten Wert der Zielgeschwindigkeit wiederholt, bis entweder die dritte und die fünfte Phase stetig in Ort, Geschwindigkeit und Beschleunigung ineinander übergehen oder die Steuereinrichtung feststellt, dass für das jeweilige Vorzeichen der Zielgeschwindigkeit eine vorläufige Achsenführung nicht ermittelbar ist.

In der Regel wird zwar für eines der beiden Vorzeichen der Geschwindigkeit in der vierten Phase eine vorläufige Achsenführung nicht zu ermitteln sein. Für mindestens eines der beiden Vorzeichen ist jedoch die vorläufige Achsenführung ermittelbar. Wenn eine vorläufige Achsenführung nur für eines der beiden Vorzeichen ermittelt werden kann, ist diese Achsenführung die gesuchte zeitoptimale vorläufige Achsenführung. Wenn ausnahmsweise für beide Vorzeichen eine vorläufige Achsenführung ermittelt werden kann, wird für diese beiden Achsenführungen die jeweils benötigte Zeit ermittelt und im Ergebnis diejenige vorläufige Achsenführung verwendet, welche die kleinere Zeit benötigt.

In vielen Fällen ist der Steuereinrichtung in dem durch die möglichen Bewegungsbereiche der Achsen aufgespannten Raum ein zulässiger Bereich bekannt, innerhalb dessen die von ihr ermittelte Bewegungsführung erfolgen muss. In diesem Fall geht die Steuereinrichtung vorzugsweise derart vor, dass sie

- prüft, ob eine ausschließlich auf dem Ende eines jeweiligen Bahnabschnitts und dem Anfang des jeweils unmittelbar nachfolgenden Bahnabschnitts basierende Bewegungsführung innerhalb des zulässigen Bereichs erfolgen würde,
- bejahendenfalls die Bewegungsführung so wie obenstehend erläutert ermittelt und
- verneinendenfalls die Bewegungsführung durch Festlegung von anzufahrenden Zwischenpunkten in mehrere unmittelbar aufeinanderfolgende, in Ort, Geschwindigkeit und Beschleunigung stetige sowie Geschwindigkeit, Beschleunigung und Ruck begrenzte Teilbewegungen unterteilt und
- die Teilbewegungen so wie eine jeweilige Bewegungsführung im Sinne der Erfindung vom Anfang des jeweiligen Teilbereichs zum Ende des jeweiligen Teilbereichs ermittelt.

Dadurch ist auch eine Berücksichtigung eines zulässigen Bereichs - beispielsweise zur Vermeidung von Kollisionen - möglich.

Es ist im Einzelfall möglich, dass diejenigen Teilbewegungen, welche weder an das Ende des jeweiligen Bahnabschnitts noch an den Anfang des jeweils nachfolgenden Bahnabschnitts angrenzen, am Anfang und/oder am Ende der jeweiligen Teilbewegung eine Geschwindigkeit und eine Beschleunigung von 0 aufweisen. Vorzugsweise weist jedoch bei mindestens einer der Teilbewegungen mindestens eine der Achsen sowohl am Anfang als auch am Ende dieser Teilbewegung eine von 0 verschiedene Geschwindigkeit und/oder eine von 0 verschiedene Beschleunigung auf. Dadurch kann die insgesamt benötigte Zeit zum Abfahren aller Teilbewegungen reduziert werden.

Es ist möglich, dass die Anfänge und die Enden der Bahnabschnitte der Steuereinrichtung als solche vorgegeben sind. Insbesondere innerhalb einer Bearbeitungsbewegung kann dies sinnvoll sein. Alternativ ist es möglich, dass die Steuereinrichtung die Anfänge und/oder die Enden der Bahnabschnitte selbsttätig ermittelt. Beispielsweise kann die Steuereinrichtung erkennen, wenn sie nach einem Werkzeugwechsel erneut eine Bearbeitung aufnehmen soll. Eine derartige Bewegung kann stets als Bewegungsführung im Sinne der Erfindung realisiert werden. Auch Mischformen sind denkbar, dass also zwar ein Teil der Anfänge und Enden der Steuereinrichtung vorgegeben ist, die Steuereinrichtung jedoch einen anderen Teil der Anfänge und/oder der Enden selbsttätig ermittelt.

Das erfindungsgemäße Betriebsverfahren führt zu einer schnellen Ermittlung der Bewegungsführung. Dadurch ist es möglich, dass die Steuereinrichtung das Betriebsverfahren online ausführt.

Die Aufgabe wird weiterhin durch ein Steuerprogramm mit den Merkmalen des Anspruchs 8 gelöst. Erfindungsgemäß wird ein Steuerprogramm der eingangs genannten Art derart ausgestaltet, dass die Abarbeitung des Maschinencodes durch die Steuereinrichtung bewirkt, dass die Steuereinrichtung eine Maschine, die eine Mehrzahl von lagegeregelten Achsen aufweist, die in ihrer Gesamtheit eine Verfahrbewegung eines ersten Elements der Maschine relativ zu einem zweiten Element der Maschine bewirken, gemäß einem erfindungsgemäßen Betriebsverfahren steuert.

Die Aufgabe wird weiterhin durch eine Steuereinrichtung für eine Maschine mit den Merkmalen des Anspruchs 9 gelöst. Erfindungsgemäß ist eine Steuereinrichtung der eingangs genannten Art mit einem erfindungsgemäßen Steuerprogramm programmiert, so dass die Abarbeitung des Maschinencodes bewirkt, dass die Steuereinrichtung die Maschine gemäß einem erfindungsgemäßen Betriebsverfahren steuert.

Die Aufgabe wird weiterhin durch eine Maschine mit den Merkmalen des Anspruchs 10 gelöst. Erfindungsgemäß ist bei einer Maschine der eingangs genannten Art die Steuereinrichtung der Maschine erfindungsgemäß ausgebildet, so dass die Steuereinrichtung die Achsen der Maschine gemäß einem erfindungsgemäßen Betriebsverfahren steuert.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

| | |
|---|---|
| FIG 1 | eine Maschine, |
| FIG 2 | mögliche Bahnabschnitte und Bewegungsführungen, |
| FIG 3 bis 5 | ein Ablaufdiagramm zur Ermittlung einer Achsenführung, |
| FIG 6 | ein Ablaufdiagramm zur Abstimmung mehrerer Achsenführungen, |
| FIG 7 | ein Ablaufdiagramm zur Ermittlung einer modifizierten Achsenführung, |
| FIG 8 | mögliche Bahnabschnitte und Bewegungsführungen und |
| FIG 9 | ein Ablaufdiagramm zur Ermittlung mehrerer Teilbewegungen. |

Gemäß FIG 1 weist eine Maschine eine Mehrzahl von lagegeregelten Achsen 1 auf. Mittels der Achsen 1 in ihrer Gesamtheit wird - eine entsprechende Ansteuerung der Achsen 1 vorausgesetzt - eine Verfahrbewegung eines ersten Elements 2 der Maschine relativ zu einem zweiten Element 3 der Maschine bewirkt. Beispielsweise kann ein Werkzeughalter (= erstes Element 2) der Maschine relativ zu einem Werkstückhalter 3 (= zweites Element) der Maschine verfahren werden, so dass ein im Werkzeughalter gehaltenes Werkzeug entsprechend der Verfahrbewegung eine Kontur eines in dem Werkstückhalter gehaltenen Werkstücks 4 verändert.

In FIG 1 sind drei Achsen 1 dargestellt, mittels derer eine Relativbewegung in drei translatorischen Richtungen x, y, z möglich ist. Diese Darstellung ist jedoch nur rein beispielhaft. Es könnten auch mehr oder weniger Achsen 1 vorhanden sein. Weiterhin sind - sei es alternativ, sei es zusätzlich zu einer Verfahrbewegung in translatorischen Richtungen x, y, z - auch Verfahrbewegungen in rotatorischen Orientierungen möglich.

In dem obenstehend erläuterten Beispiel ist die Maschine eine Werkzeugmaschine. Diese Ausgestaltung ist aber nur rein beispielhaft. Es kann sich auch um eine andere Maschine handeln, beispielsweise einen sechsachsigen Roboter (die Anzahl an Achsen des Roboters kann auch größer oder kleiner sein) oder eine andere Maschine.

Die Maschine weist eine Steuereinrichtung 4 auf. Die Steuereinrichtung 4 steuert die Achsen 1 der Maschine.

Im Falle einer Werkzeugmaschine ist die Steuereinrichtung 4 in der Regel als numerische Steuerung (CNC) ausgebildet. Im Falle einer anderen Maschine ist die Steuereinrichtung 4 in der Regel als Bewegungssteuerung ausgebildet. In beiden Fällen erfolgt eine getaktete Vorgabe von Lagesollwerten an die Achsen 1, beispielsweise alle 250 $\mu$s oder alle 125 $\mu$s. Die unmittelbar aufeinanderfolgenden Lagesollwerte weisen jeweils nur einen kleinen Versatz relativ zueinander auf. Im Ergebnis wird durch die Ansteuerung der Achsen 1 durch die Steuereinrichtung 4 bewirkt, dass die Achsen 1 eine lagegeführte Bewegung des ersten Elements 2 relativ zum zweiten Element 3 bewirken. Das erste Element 2 bewegt sich relativ zum zweiten Element 3 somit bezüglich jeder Achse 1 mit einer jeweiligen Geschwindigkeit und einer jeweiligen Beschleunigung, wobei die jeweilige Geschwindigkeit und die jeweilige Beschleunigung durch die Abfolge von Lagesollwerten der jeweiligen Achse 1 bestimmt ist oder sogar explizit vorgegeben ist.

Die Steuereinrichtung 4 ist mit einem Steuerprogramm 5 programmiert. Das Steuerprogramm 5 umfasst Maschinencode 6, der von der Steuereinrichtung 4 abarbeitbar ist. Die Programmierung der Steuereinrichtung 4 mit dem Steuerprogramm 5 bewirkt, dass die Steuereinrichtung 4 im Betrieb den Maschinencode 6 abarbeitet. Die Abarbeitung des Maschinencodes 6 bewirkt, dass die Steuereinrichtung 4 die Maschine gemäß einem Betriebsverfahren steuert, das nachstehend näher erläutert wird.

Die Steuereinrichtung 4 steuert die Maschine in Echtzeit. Die Steuereinrichtung 4 führt das Betriebsverfahren daher online aus. "Online" bedeutet in diesem Zusammenhang, dass Berechnungen und Ermittlungen von Lagesollwerten und daraus abgeleiteten Werten, welche die Steuereinrichtung 4 ausführt, binnen weniger Millisekunden abgeschlossen sein müssen, damit die ermittelten Lagesollwerte zeitrichtig an die Achsen 1 ausgegeben werden können.

Im Rahmen der Abarbeitung des Maschinencodes 6 steuert die Steuereinrichtung 4 die Achsen 1 derart an, dass das erste Element 2 - siehe die Darstellung in FIG 2 - relativ zu dem zweiten Element 3 sequenziell nacheinander mehrere vorbestimmte Bahnabschnitte B1 bis B3 abfährt. Die in FIG 2 dargestellte Anzahl von drei Bahnabschnitten B1 bis B3 ist nur rein beispielhaft. In der Regel ist die Anzahl von Bahnabschnitten B1 bis B3 erheblich größer und liegt im Bereich von mehreren 100 oder mehreren 1000. Die Bahnabschnitte B1 bis B3 sind in der Regel durch ein Nutzprogramm 7 bestimmt, beispielsweise im Fall einer Werkzeugmaschine durch ein Teileprogramm.

Der jeweilige Bahnabschnitt B1 bis B3 wird mit einem definierten Geschwindigkeitsverlauf und einem definierten Beschleunigungsverlauf abgefahren. Sowohl die Geschwindigkeit als auch die Beschleunigung können innerhalb des jeweiligen Bahnabschnitts B1 bis B3 zwar variieren und auch von Bahnabschnitt B1 bis B3 zu Bahnabschnitt B1 bis B3 voneinander verschieden sein. Sowohl die Geschwindigkeit als auch die Beschleunigung ändern sich innerhalb des jeweiligen Bahnabschnitts B1 bis B3 aber nicht abrupt, sondern nur stetig. Die Bahnabschnitte B1 bis B3 sind also in sich gesehen glatte Kurven. Der Übergang von Bahnabschnitt B1 bis B3 zu Bahnabschnitt B1 bis B3 ist jedoch diskontinuierlich. "Diskontinuierlich" bedeutet, dass die Bahnabschnitte B1 bis B3 jeweils einen Anfang A1 bis A3 und ein Ende E1 bis E3 aufweisen und dass das Ende E1 bis E3 eines jeweiligen Bahnabschnitts B1 bis B3 und der Anfang A1 bis A3 des jeweils unmittelbar nachfolgenden Bahnabschnitts B1 bis B3 - beispielsweise das Ende E1 des Bahnabschnitts B1 und der Anfang A2 des Bahnabschnitts B2 - sich in der Lage mindestens einer der lagegeregelten Achsen 1 unterscheiden.

Die Bahnabschnitte B1 bis B3 (einschließlich deren Abfolge) und damit auch die Anfänge A1 bis A3 und die Enden E1 bis E3 der Bahnabschnitte B1 bis B3 können der Steuereinrichtung 4 als solche vorgegeben sein. Die Steuereinrichtung 4 muss die Bahnabschnitte B1 bis B3 und auch die zugeordneten Geschwindigkeitsverläufe hinnehmen, so wie sie ihr vorgegeben sind. Die jeweilige Bewegungsführung für den Übergang vom Ende E1 bis E3 eines Bahnabschnitts B1 bis B3 zum Anfang A1 bis A3 des jeweils nachfolgenden Bahnabschnitts B1 bis B3 - in FIG 2 gestrichelt eingezeichnet - ist der Steuereinrichtung 4 hingegen nicht vorgegeben.

Alternativ ist es möglich, dass die Steuereinrichtung 4 die Anfänge A1 bis A3 und/oder die Enden E1 bis E3 der Bahnabschnitte B1 bis B3 selbsttätig ermittelt. Wenn beispielsweise bei einem Teileprogramm einer Werkzeugmaschine zunächst eine Bearbeitung des Werkstücks und sodann ein Werkzeugwechsel erfolgen soll, entspricht die Bearbeitung des Werkstücks einem Bahnabschnitt B1 bis B3 und der Ort, an dem das verwendete Werkzeug abgelegt werden soll, einem anzufahrenden Zielpunkt. Auch andere Konstellationen, in denen eine selbstständige Bestimmung der Bahnabschnitte B1 bis B3 erfolgen kann, sind denkbar. Beispielsweise kann der Steuereinrichtung 4 aufgrund vorheriger Bearbeitungsvorgänge bekannt sein, an welchen Stellen sich das Werkstück nicht befinden kann, so dass in diesem Bereich eine programmierte Verfahrbewegung nicht exakt eingehalten werden muss. Die Grenzen des Bereichs, in dem die programmierte Verfahrbewegung nicht eingehalten werden muss, können in diesem Fall von der Steuereinrichtung 4 als das Ende E1 bis E3 eines Bahnabschnitts B1 bis B3 und der Anfang A1 bis A3 des nachfolgenden Bahnabschnitts B1 bis B3 angesehen und bestimmt werden.

Die Ermittlung der Bewegungsführung des ersten Elements 2 relativ zum zweiten Element 3 vom Ende E1 bis E3 eines jeweiligen Bahnabschnitts B1 bis B3 zum Anfang A1 bis A3 des jeweils nachfolgenden Bandabschnitts B1 bis B3 ist Gegenstand der vorliegenden Erfindung.

Die vorliegende Erfindung wird nachstehend detailliert im Wesentlichen in Verbindung mit einer einzelnen Achse 1 erläutert. In Bezug auf diese Achse 1 verwendete Bezugszeichen enthalten stets den Buchstaben "x". Diese Achse 1 wird weiterhin als translatorisch wirkende Achse 1 angenommen. Die prinzipiell selbe Vorgehensweise ist jedoch auch bezüglich einer anders wirkenden Achse 1 möglich, insbesondere bezüglich einer rotatorisch wirkenden Achse 1. Weiterhin ist - wieder bezogen auf die jeweilige andere Achse 1 - die prinzipiell selbe Vorgehensweise bezüglich der anderen Achsen 1 möglich.

Soweit es die Abstimmung mehrerer Achsen 1 miteinander betrifft, wird weiterhin nur die Abstimmung zwischen zwei Achsen 1 erläutert. Hierbei wird angenommen, dass auch die zweite Achse 1 eine translatorisch wirkende Achse 1 ist. Die in Bezug auf diese Achse 1 verwendeten Bezugszeichen enthalten stets den Buchstaben "y". Auf ein und dieselbe Art und Weise können jedoch auch mehr als zwei Achsen 1 aufeinander abgestimmt werden, und zwar unabhängig davon, ob es sich bei den Achsen 1 um translatorisch wirkende, um rotatorisch wirkende oder um andersartig wirkende Achsen 1 handelt.

Die vorliegende Erfindung wird weiterhin für den Übergang vom Ende E1 des Bahnabschnitts B1 zum Anfang A2 des Bahnabschnitts B2 erläutert. Die analoge Vorgehensweise ist jedoch auch für die Übergänge zwischen anderen Bahnabschnitte B1 bis B3 möglich, beispielsweise vom Bahnabschnitt B2 zum Bahnabschnitt B3.

Die Bahnabschnitte B1 bis B3 werden, wie bereits erwähnt, mit einem definierten Geschwindigkeitsverlauf und einem definierten Beschleunigungsverlauf abgefahren. Am Ende E1 des Bahnabschnitts B1 weisen somit die beiden Achsen 1 die Lagen pxE und pyE, die Geschwindigkeiten vxE und vyE sowie die Beschleunigungen axE und ayE auf, wobei all diese Werte durch den Bahnabschnitt B1 bestimmt sind. In analoger Weise weisen die beiden Achsen 1 am Anfang A2 des Bahnabschnitts B2 die Lagen pxA und pyA, die Geschwindigkeiten vxA und vyA sowie die Beschleunigungen axA und ayA auf, wobei all diese Werte durch den Bahnabschnitt B2 bestimmt sind. Die Steuereinrichtung 4 ermittelt eine Bewegungsführung vom Ende E1 des Bahnabschnitts B1 zum Anfang A2 des Bahnabschnitts B2. Diese Bewegungsführung ist die - von der Steuereinrichtung 4 ermittelte - resultierende Bahn, entlang derer die Steuereinrichtung 4 das erste Element 2 relativ zum zweiten Element 3 verfährt. Diese Bewegungsführung wird bezüglich jeder beteiligten Achse mit einem von der Steuereinrichtung 4 ermittelten Geschwindigkeitsverlauf und einem dadurch ebenfalls bestimmten Beschleunigungsverlauf abgefahren.

Die Bewegungsführung ist durch den jeweils korrespondierenden zeitlichen Verlauf der Bewegung der beteiligten Achsen 1 bestimmt. Der jeweilige zeitliche Verlauf der beteiligten Achsen 1 wird nachstehend als Achsenführung bezeichnet. Sofern die Achsenführung vorläufig ist, ist sie nachfolgend mit dem Bezugszeichen AF versehen. Sofern sie endgültig ist, ist sie mit dem Bezugszeichen AF' versehen. Nachstehend wird die Ermittlung der vorläufigen Achsenführung AF für die x-Achse 1 erläutert. Die gleiche Vorgehensweise kann, wie bereits erwähnt, auch für die anderen Achsen 1 erfolgen. Die so ermittelten Achsenführungen AF sind deshalb nur vorläufig, weil die vorläufigen Achsenführungen AF' noch aufeinander abgestimmt werden müssen. Dies wird aus den weiteren Ausführungen ersichtlich werden.

Die Bewegungsführung und damit auch die vorläufigen Achsenführungen AF sind in Geschwindigkeit v, Beschleunigung a und Ruck r begrenzt. Es gelten also für jede Achse 1 die Beziehungen

$$-v\max \leq v \leq v\max, \qquad (1)$$

$$-a\max \leq a \leq a\max \qquad (2)$$

und

$$-r\max \leq r \leq r\max, \qquad (3)$$

wobei vmax, amax und rmax die maximal möglichen Beträge der Geschwindigkeit v, der Beschleunigung a und des Rucks r der jeweiligen Achse 1 sind.

Zum Ermitteln der jeweiligen vorläufigen Achsenführung AF unterteilt die Steuereinrichtung 4 gemäß den FIG 3 bis 5 in einem Schritt S1 die jeweilige vorläufige Achsenführung AF in sieben Phasen i (mit i = 1 ... 7). Die Phasen folgen entsprechend ihrer Nummerierung unmittelbar aufeinander. Jede Phase weist eine Zeitdauer Ti auf. Die Zeitdauern Ti können zwar 0 sein. In diesem Fall entartet die jeweilige Phase, so dass das die jeweils vorhergehende Phase (Phase i-1) und die jeweils nachfolgende Phase (Phase i+1) unmittelbar aneinander angrenzen. Die Zeitdauern Ti können aber nicht kleiner als 0 sein.

Der Ruck r ist in jeder Phase konstant. Der Ort x des ersten Elements 2 relativ zum zweiten Element 3 als Funktion der Zeit t kann also in jeder Phase, d.h. für die Zeitdauer Ti der jeweiligen Phase, durch die Bewegungsgleichung

$$x(t) = \frac{ri}{6} \cdot (t - ti)^3 + \frac{ai}{2} \cdot (t - ti)^2 + vi \cdot (t - ti) + xi \qquad (4)$$

beschrieben werden. Hierbei beschreibt ti den Zeitpunkt, zu dem die jeweilige Phase beginnt. ri, ai, vi und xi sind der Ruck r, die Beschleunigung a, die Geschwindigkeit v und der Ort x zu diesem Zeitpunkt ti.

Aus Gleichung 4 können die zugehörigen Gleichungen für die Geschwindigkeit v, die Beschleunigung a und den Ruck r als Funktion der Zeit t abgeleitet werden:

$$v(t) = \frac{ri}{2} \cdot (t - ti)^2 + ai \cdot (t - ti) + vi \quad (5)$$

,

$$a(t) = ri \cdot (t - ti) + ai \quad (6)$$

und

$$r(t) = ri \quad (7)$$

.

Für Phase 1 kann ohne Beschränkung der Allgemeinheit angenommen werden, dass t1 den Wert 0 aufweist. Für die anderen Phasen gilt in diesem Fall ersichtlich die Beziehung

$$ti = \sum_{j=1}^{i-1} Tj \quad (8)$$

Der Ruck r in den Phasen 2 und 6 ist 0. Für die Phasen 2 und 6 vereinfachen sich die Gleichungen 4 bis 6 somit zu

$$x(t) = \frac{ai}{2} \cdot (t - ti)^2 + vi \cdot (t - ti) + xi \quad (9)$$

,

$$v(t) = ai \cdot (t - ti) + vi \quad (10)$$

und

$$a(t) = ai \quad (11)$$

.

In Phase 4 sind sogar sowohl der Ruck r als auch die Beschleunigung a 0. Für Phase 4 vereinfachen sich die Gleichungen 4 und 5 somit zu

$$x(t) = vi \cdot (t - ti) + xi \quad (12)$$

und

$$v(t) = vi \quad (13)$$

.

Der Ruck r in den Phasen 1, 3, 5 und 7 ist betragsmäßig stets maximal. Hierbei gilt weiterhin, dass der Ruck r in der dritten Phase invers zum Ruck in der ersten Phase ist und der Ruck in der fünften Phase invers zum Ruck in der siebten Phase ist. Der Ruck r in Phase 1 und der Ruck r in Phase 7 können nach Bedarf positiv oder negativ sein und das gleiche oder voneinander verschiedene Vorzeichen aufweisen.

Die Geschwindigkeit v in der vierten Phase ist eine Zielgeschwindigkeit vZ. Die Steuereinrichtung 4 setzt die Zielgeschwindigkeit vZ in einem Schritt S2 zunächst auf den Wert +vmax. Sodann ermittelt die Steuereinrichtung 4 in einem Schritt S3 mit Ausnahme des Rucks r1 die Parameter für Phase 1. Diese Parameter sind durch die Werte für den Ort x, die Geschwindigkeit v und die Beschleunigung a am Ende E1 des Bahnabschnitts B1 gegeben und sind bereits endgültig:

$$x1 = pxE \quad , \qquad (14)$$

$$v1 = vxE \qquad (15)$$

und

$$a1 = axE \, . \qquad (16)$$

In einem Schritt S4 setzt die Steuereinrichtung 4 weiterhin den Ruck r1 für Phase 1 auf den positiven Maximalwert +rmax.

In einem Schritt S5 bestimmt die Steuereinrichtung 4 sodann anhand der Beziehung

$$T1 = \frac{a\max - a1}{r\max} \qquad (17)$$

die Zeitdauer T1 für Phase 1. Diese Bestimmung ist nur vorläufig. Somit sind - wenn auch nur vorläufig - alle Parameter der Bewegungsgleichung für Phase 1 und auch deren Zeitdauer T1 bekannt.

Sodann wird vorläufig angenommen, dass die Zeitdauer T2 der Phase 2 0 ist, so dass die Phase 3 direkt an die Phase 1 angrenzt. Aufgrund des Umstands, dass die Parameter und die Zeitdauer T1 für Phase 1 als bekannt angenommen werden, kann die Steuereinrichtung 4 somit in einem Schritt S6 - wenn auch nur vorläufig - auch die Parameter und die Zeitdauer T3 für Phase 3 ermitteln. Insbesondere gilt

$$r3 = -r1 \, , \qquad (18)$$

$$a3 = r1 \cdot T1 + a1 \, , \qquad (19)$$

$$v3 = \frac{r1}{2} \cdot T1^2 + a1 \cdot T1 + v1 \qquad (20)$$

und

$$x3 = \frac{r1}{6} \cdot T1^3 + \frac{a1}{2} \cdot T1^2 + v1 \cdot T1 + x1 \, . \qquad (21)$$

Die Zeitdauer von Phase 3 ergibt sich (vorläufig) zu

$$T3 = \frac{a3}{r\max} \, . \qquad (22)$$

Somit sind - wenn auch nur vorläufig - alle Parameter der Bewegungsgleichung für Phase 3 und auch deren Zeitdauer T3 bekannt. Somit kann die Steuereinrichtung 4 in einem Schritt S7 die Geschwindigkeit v am Ende von Phase 3 ermitteln:

$$v4 = \frac{r3}{2} \cdot T3^2 + a3 \cdot T3 + v3 \, . \qquad (23)$$

Dies ist (vorläufig) die Geschwindigkeit v, mit der - sofern die Berechnung endgültig wäre - in Phase 4 übergegangen würde.

Nun vergleicht die Steuereinrichtung 4 in einem Schritt S8 die Geschwindigkeit v4 mit der Zielgeschwindigkeit vZ. Wenn die Geschwindigkeit v4 kleiner als die Zielgeschwindigkeit vZ ist, bestimmt die Steuereinrichtung 4 in einem Schritt S9 die Zeitdauer T2 der Phase 2 zu

$$T2 = \frac{vZ - v4}{a\max} \quad (24)$$

Sodann bestimmt die Steuereinrichtung 4 in einem Schritt S10 die Parameter der Bewegungsgleichung für Phase 2. Insbesondere ergeben sich die Parameter zu

$$r2 = 0, \quad (25)$$

$$a2 = r1 \cdot T1 + a1, \quad (26)$$

$$v2 = \frac{r1}{2} \cdot T1^2 + a1 \cdot T1 + v1 \quad (27)$$

und

$$x2 = \frac{r1}{6} \cdot T1^3 + \frac{a1}{2} \cdot T1^2 + v1 \cdot T1 + x1. \quad (28)$$

Da hiermit alle Parameter einschließlich der Zeitdauer T2 für Phase 2 gegeben sind, kann die Steuereinrichtung 4 in einem Schritt S11 die Parameter für Phase 3 neu bestimmen:

$$a3 = r2 \cdot T2 + a2, \quad (29)$$

$$v3 = \frac{r2}{2} \cdot T2^2 + a2 \cdot T2 + v2 \quad (30)$$

und

$$x3 = \frac{r2}{6} \cdot T2^3 + \frac{a2}{2} \cdot T2^2 + v2 \cdot T2 + x2. \quad (31)$$

Der Ruck r3 und die Zeitdauer T3 von Phase 3 bleiben unverändert. Die Steuereinrichtung 4 ist somit auch in der Lage, in einem Schritt S12 den Ort x für den Beginn von Phase 4 zu ermitteln:

$$x4 = \frac{r3}{6} \cdot T3^3 + \frac{a3}{2} \cdot T3^2 + v3 \cdot T3 + x3. \quad (32)$$

Für die Geschwindigkeit in Phase 4 gilt die Beziehung

$$v4 = vZ. \quad (33)$$

Wenn die Steuereinrichtung 4 hingegen im Schritt S8 erkennt, dass die im Schritt S7 ermittelte Geschwindigkeit v4 größer als die Zielgeschwindigkeit vZ ist, behält die Steuereinrichtung 4 den Wert 0 für die Zeitdauer T2 von Phase 2 bei. Weiterhin reduziert die Steuereinrichtung 4 in einem Schritt S13 die Zeitdauern T1 und T3 für die Phasen 1 und 3 um gleiche Beträge. Die Steuereinrichtung 4 reduziert die Zeitdauern T1 und T3 so weit, dass bei einer Ermittlung analog zu den Schritten S6 und S7 die nunmehr ermittelte Geschwindigkeit v4 mit der Zielgeschwindigkeit vZ übereinstimmt. Die Steuereinrichtung 4 beachtet bei der Reduzierung der Zeitdauern T1 und T3 die Bedingung, dass die Zeitdauern T1 und T3 nicht negativ werden dürfen. Sodann geht die Steuereinrichtung 4 zum Schritt S12 über.

Durch die Ausführung der Schritte S1 bis S13 hat die Steuereinrichtung 4 somit eine vorläufige Achsenführung AF für die erste, zweite und dritte Phase ermittelt, so dass am Ende der dritten Phase die Beschleunigung a 0 ist und die Geschwindigkeit v gleich der Zielgeschwindigkeit vZ ist. Der am Ende der dritten Phase erreichte Ort x ist ein theoretisch erreichter Ort x4.

In einem Schritt S14 führt die Steuereinrichtung 4 sodann eine analoge Vorgehensweise für die Phasen 5 bis 7 durch. Die Ermittlung ist völlig analog zu den Schritten S1 bis S13. Man kann sich das so vorstellen, dass man den Nullpunkt der Zeit t an das Ende von Phase 7 legt und die Zeit t rückwärts laufen lässt. Die Steuereinrichtung 4 ermittelt somit eine vorläufige Achsenführung AF für die fünfte, sechste und siebte Phase, so dass am Anfang der fünften Phase die Beschleunigung a 0 ist und die Geschwindigkeit v gleich der Zielgeschwindigkeit vZ ist. Der am Anfang der fünften Phase erreichte Ort x ist ein theoretisch erreichter Ort x5.

In einem Schritt S15 ermittelt die Steuereinrichtung 4 gemäß der Beziehung

$$T4 = \frac{x5 - x4}{vZ} \qquad (34)$$

eine theoretische Zeitdauer T4 der Phase 4. In einem Schritt S16 prüft die Steuereinrichtung 4, ob die im Schritt S15 ermittelte Zeitdauer T4 positiv oder zumindest nicht negativ ist. Wenn die Zeitdauer T4 positiv oder nicht negativ ist, ist die Ermittlung der entsprechenden vorläufigen Achsenführung AF abgeschlossen. Aus den bisher vorläufigen Werten sind - soweit es die Ermittlung der entsprechenden vorläufigen Achsenführung AF betrifft - endgültige Werte geworden.

Wenn hingegen die im Schritt S15 ermittelte Zeitdauer T4 negativ ist, prüft die Steuereinrichtung in einem Schritt S17, ob ein Abbruchkriterium erfüllt ist. Wenn das Abbruchkriterium erfüllt ist, ist die Steuereinrichtung 4 nicht in der Lage, für das jeweilige Vorzeichen der Zielgeschwindigkeit vZ eine vorläufige Achsenführung AF zu ermitteln. Das Abbruchkriterium kann beispielsweise erfüllt sein, wenn der Betrag der Zielgeschwindigkeit vZ einen Schwellenwert unterschreitet. Der Schwellenwert kann beispielsweise durch die Geschwindigkeiten vxE, vxA am Ende E1 des Bahnabschnitts B1 und am Anfang A2 des Bahnabschnitts B2 bestimmt sein. Alternativ kann der Schwellenwert den Wert 0 aufweisen. Wenn das Abbruchkriterium nicht erfüllt ist, speichert die Steuereinrichtung 4 in einem Schritt S18 die Zielgeschwindigkeit vZ als alte Zielgeschwindigkeit vZ' ab. Sodann reduziert die Steuereinrichtung 4 in einem Schritt S19 unter Beibehaltung des Vorzeichens den Betrag der Zielgeschwindigkeit vZ und geht zum Schritt S8 zurück. Im Ergebnis ermittelt die Steuereinrichtung 4 somit eine neue Berechnung der vorläufigen Achsenführung AF, allerdings mit dem entsprechend modifizierten Wert der Zielgeschwindigkeit vZ. Diese erneute Berechnung wird weiterhin unter der Randbedingung durchgeführt, dass die Zeitdauer T4 der Phase 4 0 sein muss.

Im Ergebnis ermittelt die Steuereinrichtung 4 durch die Vorgehensweise gemäß den FIG 3 bis 5 somit die Parameter und die Zeitdauern T1 bis T7 für die Phasen 1 bis 7 einer zeitoptimierten Bewegungsführung für die betrachtete Achse 1, also die jeweilige vorläufige Achsenführung AF.

Die Vorgehensweise der FIG 3 bis 5 wurde obenstehend in Verbindung damit erläutert, dass im Schritt S2 die Zielgeschwindigkeit vZ mit positivem Vorzeichen auf den maximal zulässigen Wert vmax gesetzt wird und dass der Ruck r für die Phase 1 im Schritt S4 ebenfalls mit positivem Vorzeichen auf den maximal zulässigen Wert rmax gesetzt wird. Aufgrund der Aussage, dass im Schritt S14 für die Phasen 5 bis 7 die analoge Vorgehensweise wie für die Phasen 1 bis 3 ergriffen wird, wird gemäß der bisher erläuterten Vorgehensweise weiterhin auch der Ruck r für die Phase 7 mit positivem Vorzeichen auf den maximal zulässigen Wert rmax gesetzt. Die Vorgehensweise der FIG 3 bis 5 wird jedoch auch mit anderen Kombinationen der Vorzeichen für die Zielgeschwindigkeit vZ sowie den Ruck r in Phase 1 und den Ruck r in Phase 7 durchgeführt. Zumindest wird die Vorgehensweise in der Kombination wiederholt, dass die Zielgeschwindigkeit vZ mit negativem Vorzeichen auf den maximal zulässigen Betrag vmax gesetzt wird und dass der Ruck r für die Phase 1 im Schritt S4 ebenfalls mit negativen Vorzeichen auf den maximal zulässigen Betrag rmax gesetzt wird und auch der Ruck r für die Phase 7 mit negativem Vorzeichen auf den maximal zulässigen Betrag rmax gesetzt wird. Je nach Lage des Einzelfalls kann es erforderlich sein, alle acht Kombinationen (Geschwindigkeit vZ positiv oder negativ - Ruck r in Phase 1 positiv oder negativ - Ruck r in Phase 7 positiv oder negativ) zu betrachten. Im Regelfall wird es zwar für einige der betrachteten Kombinationen nicht möglich sein, eine Achsenführung AF zu ermitteln. Bei mindestens einer der betrachteten Kombinationen ist diese Möglichkeit jedoch gegeben. Weiterhin muss, sofern in Phase 1 der Ruck r mit negativen Vorzeichen auf den maximal zulässigen Betrag rmax gesetzt wird, Gleichung 17 dahingehend modifiziert werden, dass die maximal möglichen Beträge amax und rmax für die Beschleunigung a und den Ruck r mit einem negativen Vorzeichen versehen werden. Gleichung 17 ändert sich dadurch zu

$$T1 = \frac{a\max + a1}{r\max} \qquad (35)$$

Ergeben sich mehrere mögliche Achsenführungen AF, so ermittelt die Steuereinrichtung 4 für alle möglichen Achsenführungen AF gemäß der Beziehung

$$TA = \sum_{i=1}^{7} Ti \qquad (36)$$

die jeweilige Achsenzeit TA. Sie selektiert sodann diejenige mögliche Achsenführung AF mit der kleinsten Achsenzeit TA als vorläufige Achsenführung AF für diese Achse 1. Ergibt sich nur eine einzige mögliche Achsenführung AF, wird für diese Achse 1 selbstverständlich diese mögliche Achsenführung AF übernommen. Die zugehörige Achsenzeit TA ergibt sich wie zuvor gemäß Gleichung 36. Die ermittelte vorläufige Achsenführung AF ist - für die jeweilige Achse 1 - zeitoptimal, in Geschwindigkeit v und Beschleunigung a stetig sowie in Geschwindigkeit v, Beschleunigung a und Ruck r begrenzt. Sie ist weiterhin auch im Ort x stetig. Dies ergibt sich aus der - selbstverständlichen - Bedingung, dass die Bewegungsführung vom Ende E1 des Bahnabschnitts B1 zum Anfang A2 des Bahnabschnitts B2 ermittelt wird.

Die obenstehend in Verbindung mit den FIG 3 bis 5 erläuterte Vorgehensweise, also die Ermittlung und gegebenenfalls Selektion der vorläufigen Achsenführung AF, führt die Steuereinrichtung 4 gemäß FIG 6 in einem Schritt S21 für jede Achse 1 aus, und zwar unabhängig von den anderen Achsen 1. Sie ermittelt dadurch für alle Achsen 1 eine (1) jeweilige vorläufige Achsenführung AF und die jeweilige zugehörige Achsenzeit TA. Die vorläufigen Achsenführungen AF sind jedoch noch nicht aufeinander abgestimmt. Um diese Abstimmung vorzunehmen, bestimmt die Steuereinrichtung 4 in einem Schritt S22 das Maximum TAm der Achsenzeiten TA der Achsen 1. Weiterhin übernimmt die Steuereinrichtung 4 in einem Schritt S23 für diejenigen Achsen 1, deren Achsenzeit TA mit dem Maximum TAm der Achsenzeiten TA übereinstimmt, die jeweilige ermittelte vorläufige Achsenführung AF unverändert als endgültige Achsenführung AF'. Aufgrund der unveränderten Übernahme ist die endgültige Achsenzeit TA' für diese Achsen 1 unverändert gleich dem Maximum TAm.

Für die Achsen 1, deren Achsenzeit TA kleiner als das Maximum TAm der Achsenzeiten TA ist, modifiziert die Steuereinrichtung 4 in einem Schritt S24 die zuvor ermittelte jeweilige vorläufige Achsenführung AF. Die Modifikation wird später in Verbindung mit FIG 7 noch erläutert werden. Die Modifikation ist derart, dass nach Abschluss der Modifikation die modifizierte Achsenzeit TA' gleich dem Maximum TAm ist, die Stetigkeit in Ort x, Geschwindigkeit v und Beschleunigung a jedoch erhalten bleibt.

Zur entsprechenden Modifizierung des Schrittes S24 speichert die Steuereinrichtung 4 vorzugsweise zunächst in einem Schritt S31 für die jeweilige Achse 1 gemäß FIG 7 die ermittelte Zielgeschwindigkeit vZ der betrachteten Achse 1 als alte Zielgeschwindigkeit vZ' ab. Sodann reduziert die Steuereinrichtung 4 in einem Schritt S32 für die betrachtete Achse 1 den Betrag der zuvor ermittelten Zielgeschwindigkeit vZ. Mit dieser betragsmäßig reduzierten Zielgeschwindigkeit vZ ermittelt die Steuereinrichtung 4 in einem Schritt S33 erneut die entsprechende Achsenführung AF und die zugehörige Achsenzeit TA. Die Implementierung des Schrittes S33 korrespondiert im Wesentlichen mit der Vorgehensweise der FIG 3 bis 5 mit Ausnahme des Umstands, dass die Zielgeschwindigkeit vZ bereits vorgegeben ist, so dass der Schritt S2 entfallen kann. In einem Schritt S34 prüft die Steuereinrichtung 4, ob die im Schritt S33 ermittelte modifizierte Achsenzeit TA größer als das Maximum TAm ist. Wenn dies nicht der Fall ist, geht die Steuereinrichtung 4 wieder zum Schritt S31 zurück. Dadurch wird im Ergebnis die Zielgeschwindigkeit vZ betragsmäßig immer weiter verringert, bis die im Schritt S33 ermittelte modifizierte Achsenzeit TA größer als das Maximum TAm ist.

Sobald die im Schritt S33 ermittelte modifizierte Achsenzeit TA größer als das Maximum TAm ist, sind der Steuereinrichtung 4 zwei Zielgeschwindigkeiten bekannt, nämlich die Zielgeschwindigkeiten vZ und vZ', wobei eine der zugehörigen Achsenzeiten TA größer und die andere Achsenzeit TA kleiner als das Maximum TAm ist. Die Steuereinrichtung 4 kann daher in einem Schritt S35 ohne weiteres eine endgültige Zielgeschwindigkeit vZ ermitteln, bei welcher die zugehörige Achsenzeit TA gleich dem Maximum TAm ist. Beispielsweise kann die Steuereinrichtung 4 iterativ jeweils eine Zielgeschwindigkeit vZ zwischen den beiden zuletzt gültigen Zielgeschwindigkeiten vZ, vZ' bestimmen und für diese Zielgeschwindigkeit vZ erneut die Achsenzeit TA ermitteln, bis die sich ergebende Achsenzeit TA gleich dem Maximum TAm ist. Die Bestimmung des Schrittes S35 kann beispielsweise durch Intervallteilung oder gemäß dem Sekantenverfahren erfolgen. Auch andere Vorgehensweise sind möglich. Im Rahmen von Schritt S35 erfolgt auch zugleich die erneute Ermittlung der entsprechenden vorläufigen Achsenführung AF. Dies ist erforderlich, weil ohne Ermittlung der vorläufigen Achsenführung AF die Achsenzeit TA nicht ermittelt werden kann.

Im Ergebnis ist die Steuereinrichtung 4 somit in der Lage, eine Bewegungsführung - nämlich die Gesamtheit der endgültigen Achsenführungen AF' - vom Ende E1 bis E3 eines jeweiligen Bahnabschnitts B1 bis B3 zum Anfang A1 bis A3 des jeweils unmittelbar nachfolgenden Bahnabschnitts B1 bis B3 zu ermitteln, so dass die Bewegung des ersten Elements 2 der Maschine relativ zu dem zweiten Element 3 der Maschine am Ende E1 bis E3 des jeweiligen Bahnabschnitts B1 bis B3 stetig in Ort pxE, pyE, Geschwindigkeit vxE, vyE und Beschleunigung axE, ayE in die ermittelte Bewegungsführung übergeht und weiterhin auch die Bewegungsführung am Anfang A1 bis A3 des jeweils unmittelbar nachfolgenden Bahnabschnitts B1 bis B3 stetig in Ort pxA, pyA, Geschwindigkeit vxA, vyA und Beschleunigung axA, ayA in den jeweils unmittelbar nachfolgenden Bahnabschnitt B1 bis B3 übergeht. Entsprechend dieser Bewegungsführung steuert die Steuereinrichtung 4 die Achsen 1 an, um das erste Element 2 der Maschine relativ zum zweiten Element 3 der Maschine vom Ende E1 bis E3 eines jeweiligen Bahnabschnitts B1 bis B3 zum Anfang A1 bis A3 des jeweils unmittelbar nachfolgenden Bahnabschnitts B1 bis B3 zu führen.

Bisher wurde eine Vorgehensweise erläutert, bei welcher eine Bewegungsführung vom Ende E1 eines jeweiligen Bahnabschnitts B1 direkt zum Anfang A2 des jeweils nachfolgenden Bahnabschnitts B2 ermittelt wurde. FIG 8 zeigt eine derartige Bewegungsführung. In vielen Fällen kann diese Bewegungsführung problemlos verwendet werden. Oftmals ist der Steuereinrichtung 4 jedoch in dem durch die möglichen Bewegungsbereiche der Achsen 1 aufgespannten Raum ein zulässiger Bereich bekannt, innerhalb dessen die von ihr ermittelte Bewegungsführung erfolgen muss. Anders ausgedrückt: Es gibt - siehe FIG 8 - umgekehrt einen verbotenen Bereich 8, in dem die Bewegungsführung nicht erfolgen darf. Es ist möglich, dass der Steuereinrichtung 4 der zulässige Bereich als solcher direkt vorgegeben ist. Alternativ ist es möglich, dass der Steuereinrichtung 4 umgekehrt der verbotene Bereich 8 vorgegeben ist, so dass die Steuereinrichtung 4 indirekt den zulässigen Bereich ermitteln kann. Um auch in einem derartigen Fall eine ordnungsgemäße Bewegungsführung ermitteln zu können, geht die Steuereinrichtung 4 so vor, wie dies nachstehend in Verbindung mit FIG 9 erläutert wird.

Gemäß FIG 9 prüft die Steuereinrichtung 4 in einem Schritt S41, ob eine Bewegungsführung, die ausschließlich auf dem Ende E1 eines jeweiligen Bahnabschnitts B1 und dem Anfang A2 des jeweils unmittelbar nachfolgenden Bahnabschnitts B2 basiert, innerhalb des zulässigen Bereichs erfolgen würde. Wenn dies der Fall ist, ermittelt die Steuereinrichtung 4 in einem Schritt S42 - so wie in Verbindung mit den FIG 1 bis 7 erläutert - die Bewegungsführung des ersten Elements 2 relativ zum zweiten Element 3. Es ist jedoch auch möglich, dass die Steuereinrichtung 4 im Schritt S41 feststellt, dass die von ihr ermittelte Bewegungsführung in den verbotenen Bereich 8 eintreten würde. Ein Beispiel einer derartigen verbotenen Bewegungsführung ist in FIG 8 strichpunktiert eingezeichnet. Falls die ermittelte Bewegungsführung in den verbotenen Bereich eindringt, unterteilt die Steuereinrichtung 4 die Bewegungsführung in einem Schritt S43 in mehrere unmittelbar aufeinanderfolgende Teilbewegungen. Insbesondere legt die Steuereinrichtung 4 im Schritt S43 Zwischenpunkte P1, P2 usw. fest, die im Verlauf der noch zu ermittelnden Bewegungsführung angefahren werden müssen. Die Steuereinrichtung 4 unterteilt dadurch die Bewegungsführung in mehrere Teilbewegungen. Die Teilbewegungen folgen unmittelbar aufeinander, beispielsweise vom Ende E1 des einen Bahnabschnitts B1 zum ersten Zwischenpunkt P1, von dort zum zweiten Zwischenpunkt P2 und von dort zum Anfang A2 des nachfolgenden Bahnabschnitts B2. Die entsprechende Ermittlung der Zwischenpunkte P1, P2 usw. ist Fachleuten allgemein bekannt. Sie wird insbesondere zur Kollisionsvermeidung verwendet.

Falls die Steuereinrichtung 4 derartige Zwischenpunkte P1, P2 usw. bestimmt, führt die Steuereinrichtung 4 die obenstehend erläuterte Vorgehensweise bezüglich der jeweiligen Teilbewegung aus. Sie ermittelt also in einem Schritt S44 gemäß der obenstehend erläuterten Vorgehensweise jeweils eine Bewegungsführung für die jeweilige Teilbewegung vom Ende E1 des einen Bahnabschnitts B1 zum ersten Zwischenpunkt P1, eine Bewegungsführung für die Teilbewegung vom ersten Zwischenpunkt P1 zum zweiten Zwischenpunkt P2 und eine Bewegungsführung für die Teilbewegung vom zweiten Zwischenpunkt P2 zum Anfang A2 des nachfolgenden Bahnabschnitts B2. Die Ermittlung erfolgt jeweils so, als ob die Teilbewegungen jeweils eine eigene Bewegungsführung wären. Die Teilbewegungen sind aufgrund der Art und Weise der Ermittlung (so wie vorstehend erläutert) jeweils in sich stetig in Ort x, Geschwindigkeit v und Beschleunigung a und begrenzt in Geschwindigkeit v, Beschleunigung a und Ruck r. Weiterhin geht der eine Bahnabschnitt B1 stetig in Ort x, Geschwindigkeit v und Beschleunigung a in die zuerst ausgeführte Teilbewegung über und geht die zuletzt ausgeführte Teilbewegung stetig in Ort x, Geschwindigkeit v und Beschleunigung a in den jeweils nachfolgenden Bahnabschnitt B2 über. Auch die Übergänge von einer Teilbewegung zur nachfolgenden Teilbewegungen sind stetig in Geschwindigkeit v und Beschleunigung a.

Um das Potenzial der vorliegenden Erfindung in vollem Umfang nutzen zu können, sollte nach Möglichkeit für die Zwischenpunkte P1, P2 usw. nicht nur der jeweilige Ort x definiert sein. Zusätzlich sollte zumindest auch die jeweilige Geschwindigkeit v und/oder Beschleunigung a mindestens einer der Achsen 1 einen von 0 verschiedenen Wert aufweisen.

Eine mögliche Vorgehensweise besteht darin, für die Zwischenpunkte P1, P2 usw. jeweils eine direkte Verbindung der beiden Enden der beiden angrenzenden Teilbewegungen zu ermitteln. Dies ist in FIG 8 für den Zwischenpunkt P1 gestrichelt angedeutet. Der zugehörige Vektor kann zur Definition der Richtung der Geschwindigkeit am Zwischenpunkt P1 herangezogen werden. Insbesondere kann die Richtung der Geschwindigkeit am Zwischenpunkt P1 parallel zu diesem Vektor verlaufen. Der Geschwindigkeitsvektor wird sodann derart skaliert, dass für mindestens eine Achse 1 die Geschwindigkeit v betragsmäßig ihren maximal möglichen Wert vmax erreicht und für die anderen Achsen 1 die Geschwindigkeit v betragsmäßig unter ihrem jeweils maximal möglichen Wert vmax liegt. Alternativ ist es möglich, alle Geschwindigkeitskomponenten betragsmäßig auf ihren jeweils maximal möglichen Wert vmax zu setzen und nur das Vorzeichen anhand des durch die direkte Verbindung der beiden Enden der beiden angrenzenden Teilbewegungen definierten Vektor festzulegen. Es sind aber auch andere Vorgehensweisen denkbar.

Zusammengefasst betrifft die vorliegende Erfindung somit folgenden Sachverhalt:
Eine Maschine weist eine Mehrzahl von lagegeregelten Achsen 1 auf, die in ihrer Gesamtheit eine Verfahrbewegung zweier Elemente 2, 3 der Maschine relativ zueinander bewirken. Die Steuereinrichtung 4 steuert die Achsen 1 der Maschine derart an, dass die Elemente 2, 3 relativ zueinander sequenziell nacheinander Bahnabschnitte B1 bis B3 mit für die Bahnabschnitte B1 bis B3 definierten Geschwindigkeitsverläufen und dadurch definierten Beschleunigungsverläufen abfährt. Die Bahnabschnitte B1 bis B3 weisen jeweils einen Anfang A1 bis A3 und ein Ende E1 bis E3 auf, wobei das Ende E1 und der Anfang A2 unmittelbar nachfolgender Bahnabschnitte B1, B2 sich in der Lage mindestens einer Achse 1 unterscheiden. Die Steuereinrichtung 4 ermittelt für die Achsen 1 eine zeitoptimale, in Ort x, Geschwindigkeit v und Beschleunigung a stetige und in Geschwindigkeit v, Beschleunigung a und Ruck r begrenzte Bewegungsführung vom Ende E1 des einen zum Anfang A2 des nachfolgenden Bahnabschnitts B1, B2. Die Ermittlung erfolgt derart, dass die Bewegung der Elemente 2, 3 relativ zueinander am Ende E1 des einen Bahnabschnitts B1 stetig in Ort x, Geschwindigkeit v und Beschleunigung a in die ermittelte Bewegungsführung übergeht und die ermittelte Bewegungsführung am Anfang A2 des anderen Bahnabschnitts B2 stetig in Ort x, Geschwindigkeit v und Beschleunigung a in den anderen Bahnabschnitt B2 übergeht. Die Steuereinrichtung 4 ermittelt als Bewegungsführung sowohl die abzufahrende Bahn als solche als auch die zugehörigen Geschwindigkeits- und Beschleunigungsprofile.

Die vorliegende Erfindung weist viele Vorteile auf. Insbesondere kann die Zeitdauer, die für unproduktive Wegabschnitte benötigt wird, minimiert werden, so dass die Gesamt-Bearbeitungszeit reduziert und dadurch die Effizienz gesteigert werden kann. Dies gilt gleichermaßen für alle Arten von unproduktiven Wegabschnitten. Die Berücksichtigung eines zulässigen Bereichs (bzw. umgekehrt eines verbotenen Bereichs 8) ist ohne weiteres möglich. Das erfindungsgemäße Verfahren ist so schnell, dass es online und in Echtzeit auf der Steuereinrichtung 4 ausgeführt werden kann. Der Steuereinrichtung 4 sind weiterhin auch die Dynamikbegrenzungen der Maschine bekannt, also die maximal möglichen Beträge vmax, amax, rmax für Geschwindigkeiten v, Beschleunigungen a und Rucke r der einzelnen Achsen 1. Das Steuerprogramm 5, welches das erfindungsgemäße Betriebsverfahren realisiert, kann ohne weiteres bei einer bestehenden Steuereinrichtung 4 nachgerüstet werden. Ein Austausch einer bestehenden Steuereinrichtung 4 ist nicht erforderlich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Maschine, die eine Mehrzahl von lagegeregelten Achsen (1) aufweist, die in ihrer Gesamtheit eine Verfahrbewegung eines ersten Elements (2) der Maschine relativ zu einem zweiten Element (3) der Maschine bewirken,

   - wobei die Steuereinrichtung (4) die Achsen (1) der Maschine derart ansteuert, dass das erste Element (2) der Maschine relativ zu dem zweiten Element (3) der Maschine sequenziell nacheinander mehrere vorbestimmte Bahnabschnitte (B1 bis B3) mit einem für den jeweiligen Bahnabschnitt (B1 bis B3) definierten jeweiligen Geschwindigkeitsverlauf und einem für den jeweiligen Bahnabschnitt (B1 bis B3) durch den jeweiligen Geschwindigkeitsverlauf definierten jeweiligen Beschleunigungsverlauf abfährt,
   - wobei die Bahnabschnitte (B1 bis B3) jeweils einen Anfang (A1 bis A3) und ein Ende (E1 bis E3) aufweisen und das Ende (E1) eines jeweiligen Bahnabschnitts (B1) und der Anfang (A2) des jeweils unmittelbar nachfolgenden Bahnabschnitts (B2) sich in der Lage mindestens einer der lagegeregelten Achsen (1) unterscheiden,

   **dadurch gekennzeichnet,**
   **dass** der Steuereinrichtung (4) für eine Bewegungsführung vom Ende (E1) eines jeweiligen Bahnabschnitts (B1) zum Anfang (A2) des jeweils unmittelbar nachfolgenden Bahnabschnitts (B2) zunächst nur das Ende (E1) des jeweiligen Bahnabschnitts (B1) und der Anfang (A2) des jeweils unmittelbar nachfolgenden Bahnabschnitts (B2), nicht aber eine vom Ende (E1) eines jeweiligen Bahnabschnitts (B1) zum Anfang (A2) des jeweils unmittelbar nachfolgenden Bahnabschnitts (B2) abzufahrende Bahn bekannt sind, dass die Steuereinrichtung (4) für die Achsen (1) eine jeweilige endgültige Achsenführung (AF') ermittelt, dass die Gesamtheit der endgültigen Achsenführungen (AF') der Bewegungsführung entspricht und dass die endgültigen Achsenführungen (AF') derart aufeinander abgestimmt sind, dass die Bewegung des ersten Elements (2) der Maschine relativ zu dem zweiten Element (3) der Maschine innerhalb der ermittelten Bewegungsführung zeitoptimal, in Ort (x), Geschwindigkeit (v) und Beschleunigung (a) stetig und in Geschwindigkeit (v), Beschleunigung (a) und Ruck (r) begrenzt ist, am Ende (E1) des jeweiligen Bahnabschnitts (B1) stetig in Ort (x), Geschwindigkeit (v) und Beschleunigung (a) in die ermittelte Bewegungsführung übergeht und die ermittelte Bewegungsführung am Anfang (A2) des jeweils unmittelbar nachfolgenden Bahnabschnitts (B2) stetig in Ort (x), Geschwindigkeit (v) und Beschleunigung (a) in den jeweils unmittelbar nachfolgenden Bahnabschnitt (B2) übergeht, wobei die Steuereinrichtung (4) zum Ermitteln der Bewegungsführung

- zunächst für die Achsen (1) unabhängig voneinander eine jeweilige zeitoptimale, in Ort (x), Geschwindigkeit (v) und Beschleunigung (a) stetige und in Geschwindigkeit (v), Beschleunigung (a) und Ruck (r) begrenzte vorläufige Achsenführung (AF) vom Ende (E1) eines jeweiligen Bahnabschnitts (B1) zum Anfang (A2) des jeweils unmittelbar nachfolgenden Bahnabschnitts (B2) ermittelt, so dass - bezogen auf die jeweils betrachtete Achse (1) - die Bewegung des ersten Elements (2) der Maschine relativ zu dem zweiten Element (3) der Maschine am Ende (E1) des jeweiligen Bahnabschnitts (B1) stetig in Ort (x), Geschwindigkeit (v) und Beschleunigung (a) in die ermittelte vorläufige Achsenführung (AF) übergeht und die ermittelte vorläufige Achsenführung (AF) am Anfang (A2) des jeweils unmittelbar nachfolgenden Bahnabschnitts (B2) stetig in Ort (x), Geschwindigkeit (v) und Beschleunigung (a) in den jeweils unmittelbar nachfolgenden Bahnabschnitt (B2) übergeht,
- für die Achsen (1) die für die jeweilige vorläufige Achsenführung (AF) benötigte Achsenzeit (TA) ermittelt,
- die vorläufige Achsenführung (AF) mit der größten benötigten Achsenzeit (TAm) für diese Achse (1) unverändert als endgültige Achsenführung (AF') übernimmt,
- für die Achsen (1) mit einer kleineren als der größten benötigten Achsenzeit (TAm) die jeweilige vorläufige Achsenführung (AF) modifiziert, so dass die Stetigkeit in Ort (x), Geschwindigkeit (v) und Beschleunigung (a) erhalten bleibt und die zugehörige Achsenzeit (TA) mit der größten benötigten Achsenzeit (TAm) übereinstimmt, und die so ermittelten modifizierten Achsenführungen (AF) als endgültige Achsenführungen (AF') übernimmt.

**2.** Betriebsverfahren nach Anspruch 1,
**dadurch gekennzeichnet,**
**dass** die Steuereinrichtung (4) zum Modifizieren der jeweiligen vorläufigen Achsenführung (AF) den Betrag der Zielgeschwindigkeit (vZ) reduziert und basierend auf der betragsmäßig entsprechend reduzierten Zielgeschwindigkeit (vZ) erneut die jeweilige vorläufige Achsenführung (AF) und die zugehörige Achsenzeit (TA) ermittelt, bis die zugehörige Achsenzeit (TA) mit der größten benötigten Achsenzeit (TAm) übereinstimmt.

**3.** Betriebsverfahren nach Anspruch 1 oder 2,
**dadurch gekennzeichnet,**

- **dass** die Steuereinrichtung (4) zum Ermitteln der jeweiligen vorläufigen Achsenführung (AF) die jeweilige vorläufige Achsenführung (AF) in sieben unmittelbar aufeinanderfolgende Phasen unterteilt, wobei

  -- jede der aufeinanderfolgenden Phasen eine jeweilige zumindest nicht negative Zeitdauer (T1 bis T7) aufweist,
  -- in der ersten Phase und in der siebten Phase der Ruck (r) positiv oder negativ, betragsmäßig aber maximal ist,
  -- in der dritten Phase der Ruck (r) invers zum Ruck (r) in der ersten Phase ist und in der fünften Phase der Ruck (r) invers zum Ruck (r) in der siebten Phase ist,
  -- in der zweiten und sechsten Phase der Ruck (r) 0 ist,
  -- in der vierten Phase der Ruck (r) und die Beschleunigung (a) 0 sind und
  -- die Geschwindigkeit (v) in der vierten Phase die Zielgeschwindigkeit (vZ) ist,

- **dass** die Steuereinrichtung (4) die Zielgeschwindigkeit (vZ) nacheinander zunächst mit positiven und negativen Vorzeichen auf den maximal zulässigen Wert (vmax) setzt,
- **dass** die Steuereinrichtung (4) für den jeweiligen Wert der Zielgeschwindigkeit (vZ)

  -- die zugehörigen Abschnitte der jeweiligen vorläufigen Achsenführung (AF) für die erste, zweite und dritte Phase ermittelt, so dass am Ende der dritten Phase die Beschleunigung (a) 0 ist und die Geschwindigkeit (v) gleich der jeweiligen Zielgeschwindigkeit (vZ) ist,
  -- die zugehörigen Abschnitte der jeweiligen vorläufigen Achsenführung (AF) für die fünfte, sechste und siebte Phase ermittelt, so dass am Anfang der fünften Phase die Beschleunigung (a) 0 ist und die Geschwindigkeit (v) gleich der jeweiligen Zielgeschwindigkeit (vZ) ist,
  -- prüft, ob angesichts der ermittelten ersten bis dritten Phase und der ermittelten fünften bis siebten Phase eine theoretische Zeitdauer (T4) der vierten Phase größer als 0 ist oder gleich 0 ist,

-- bejahendenfalls die Abschnitte der jeweiligen vorläufigen Achsenführung (AF) für die erste bis dritte und fünfte bis siebte Phase übernimmt und für die vierte Phase die ermittelte theoretische Zeitdauer (T4) als Zeitdauer (T4) übernimmt,

-- verneinendenfalls die Zeitdauer (T4) der vierten Phase auf 0 setzt, so dass im Ergebnis die dritte Phase und die fünfte Phase unmittelbar aneinander angrenzen, und weiterhin den Betrag der Zielgeschwindigkeit (vZ) reduziert und die Ermittlung der jeweiligen vorläufigen Achsenführung (AF) für erste, zweite und dritte Phase sowie für die fünfte, sechste und siebte Phase mit dem entsprechend modifizierten Wert der Zielgeschwindigkeit (vZ) wiederholt, bis entweder die dritte und die fünfte Phase stetig in Ort (x), Geschwindigkeit (v) und Beschleunigung (a) ineinander übergehen oder die Steuereinrichtung (4) feststellt, dass für das jeweilige Vorzeichen der Zielgeschwindigkeit (vZ) eine vorläufige Achsenführung (AF) nicht ermittelbar ist.

**4.** Betriebsverfahren nach einem der obigen Ansprüche,
**dadurch gekennzeichnet,**

- **dass** der Steuereinrichtung (4) in dem durch die möglichen Bewegungsbereiche der Achsen (1) aufgespannten Raum ein zulässiger Bereich bekannt ist, innerhalb dessen die von ihr ermittelte Bewegungsführung erfolgen muss,
- **dass** die Steuereinrichtung (4) prüft, ob eine ausschließlich auf dem Ende (E1) eines jeweiligen Bahnabschnitts (B1) und dem Anfang (A2) des jeweils unmittelbar nachfolgenden Bahnabschnitts (B2) basierende Bewegungsführung innerhalb des zulässigen Bereichs erfolgen würde,
- **dass** die Steuereinrichtung (4) bejahendenfalls die Bewegungsführung entsprechend einem der Ansprüche 1 bis 4 ermittelt und
- **dass** die Steuereinrichtung (4) verneinendenfalls die Bewegungsführung durch Festlegung von anzufahrenden Zwischenpunkten (P1, P2) in mehrere unmittelbar aufeinanderfolgende, in Ort (x), Geschwindigkeit (v) und Beschleunigung (a) stetige sowie Geschwindigkeit (v), Beschleunigung (a) und Ruck (r) begrenzte Teilbewegungen unterteilt und
- **dass** die Steuereinrichtung (4) die Teilbewegungen so wie eine jeweilige Bewegungsführung im Sinne der Ansprüche 1 bis 4 vom Anfang des jeweiligen Teilbereichs zum Ende des jeweiligen Teilbereichs ermittelt.

**5.** Betriebsverfahren nach Anspruch 4,
**dadurch gekennzeichnet,**
**dass** bei mindestens einer der Teilbewegungen mindestens eine der Achsen (1) sowohl am Anfang als auch am Ende dieser Teilbewegung eine von 0 verschiedene Geschwindigkeit (v) und/oder eine von 0 verschiedene Beschleunigung (a) aufweist.

**6.** Betriebsverfahren nach einem der obigen Ansprüche,
**dadurch gekennzeichnet,**
**dass** die Anfänge (A1 bis A3) und die Enden (E1 bis E3) der Bahnabschnitte (B1 bis B3) der Steuereinrichtung (4) als solche vorgegeben sind und/oder dass die Steuereinrichtung (4) die Anfänge (A1 bis A3) und/oder die Enden (E1 bis E3) der Bahnabschnitte (B1 bis B3) selbsttätig ermittelt.

**7.** Betriebsverfahren nach einem der obigen Ansprüche,
**dadurch gekennzeichnet, dass** die Steuereinrichtung (4) das Betriebsverfahren online ausführt.

**8.** Steuerprogramm für eine Steuereinrichtung (4), wobei das Steuerprogramm Maschinencode (6) aufweist, der von der Steuereinrichtung (4) abarbeitbar ist, wobei die Abarbeitung des Maschinencodes (6) durch die Steuereinrichtung (4) bewirkt, dass die Steuereinrichtung (4) eine Maschine, die eine Mehrzahl von lagegeregelten Achsen (1) aufweist, die in ihrer Gesamtheit eine Verfahrbewegung eines ersten Elements (2) der Maschine relativ zu einem zweiten Element (3) der Maschine bewirken, gemäß einem Betriebsverfahren nach einem der Ansprüche 1 bis 7 steuert.

**9.** Steuereinrichtung für eine Maschine, die eine Mehrzahl von lagegeregelten Achsen (1) aufweist, die in ihrer Gesamtheit eine Verfahrbewegung eines ersten Elements (2) der Maschine relativ zu einem zweiten Element (3) der Maschine bewirken, wobei die Steuereinrichtung mit einem Steuerprogramm (5) nach Anspruch 9 programmiert ist, so dass die Steuereinrichtung die Maschine gemäß einem Betriebsverfahren nach einem der Ansprüche 1 bis 7 steuert.

**10.** Maschine, die eine Mehrzahl von lagegeregelten Achsen (1) aufweist, die in ihrer Gesamtheit eine Verfahrbewegung eines ersten Elements (2) der Maschine relativ zu einem zweiten Element (3) der Maschine bewirken, wobei die Maschine eine Steuereinrichtung (4) nach Anspruch 9 aufweist, welche die Achsen (1) der Maschine gemäß einem Betriebsverfahren nach einem der Ansprüche 1 bis 7 steuert.

## Claims

**1.** Operating method for a machine which has a plurality of position-controlled axes (1), which cause, in their entirety, a displacement movement of a first element (2) of the machine relative to a second element (3) of the machine,

- wherein the control facility (4) controls the axes (1) of the machine such that the first element (2) of the machine traverses relative to the second element (3) of the machine a plurality of predetermined path sections (B1 to B3) sequentially one after another, each with a velocity profile defined for the respective path section (B1 to B3) and an acceleration profile defined for the respective path section (B1 to B3) by the respective velocity profile,
- wherein the path sections (B1 to B3) each have a beginning (A1 to A3) and an end (E1 to E3) and the end (E1) of each path section (B1) and the beginning (A2) of the respective directly subsequent path section (B2) differ in the position of at least one of the position-controlled axes (1),

**characterised in that**
for a movement guidance from the end (E1) of a respective path section (B1) to the beginning (A2) of the respective directly subsequent path section (B2), initially only the end (E1) of the respective path section (B1) and the beginning (A2) of the respective directly subsequent path section (B2), but not a path to be traversed from the end (E1) of a respective path section (B1) to the beginning (A2) of the respective directly subsequent path section (B2) are known to the control facility (4), **in that** the control facility (4) determines for the axes (1) a respective final axis guidance (AF'), **in that** the entirety of the final axis guidances (AF') corresponds to the movement guidance and **in that** the final axis guidances (AF') are coordinated with one another such that the movement of the first element (2) of the machine relative to the second element (3) of the machine within the determined movement guidance is time-optimal, continuous in location (x), velocity (v) and acceleration (a) and is limited in velocity (v), acceleration (a) and jerk (r), at the end (E1) of the respective path section (B1), transitions continuously in location (x), velocity (v) and acceleration (a) into the determined movement guidance and the determined movement guidance at the beginning (A2) of the respective directly subsequent path section (B2) transitions continuously in location (x), velocity (v) and acceleration (a) into the respective directly subsequent path section (B2)), wherein the control apparatus (4), for determining the movement guidance

- initially determines, for the axes (1) independently of one another, a respective preliminary axis guidance (AF) that is time-optimal and continuous in location (x), velocity (v) and acceleration (a) and is limited in velocity (v), acceleration (a) and jerk (r), from the end (E1) of a respective path section (B1) to the beginning (A2) of the respective directly subsequent path section (B2), so that - relative to the respectively considered axis (1) - the movement of the first element (2) of the machine relative to the second element (3) of the machine at the end (E1) of the respective path section (B1) transitions continuously in location (x), velocity (v) and acceleration (a) into the determined preliminary axis guidance (AF) and the determined preliminary axis guidance (AF) at the beginning (A2) of the respective directly subsequent path section (B2) transitions continuously in location (x), velocity (v) and acceleration (a) into the respective directly subsequent path section (B2),
- determines the axis time (TA) for the axes (1) required for the respective preliminary axis guidance (AF),
- adopts the preliminary axis guidance (AF) with the greatest required axis time (TAm) for this axis (1) unchanged as the final axis guidance (AF'),
- modifies, for the axes (1) with an axis time smaller than the greatest required axis time (TAm), the respective preliminary axis guidance (AF), so that the continuity in location (x), velocity (v) and acceleration (a) is retained and the associated axis time (TA) matches the greatest required axis time (TAm) and adopts the thus determined modified axis guidances (AF) as the final axis guidances (AF').

**2.** Operating method according to claim 1,
**characterised in that**
for modifying the respective preliminary axis guidance (AF), the control facility (4) reduces the value of the target velocity (vZ) and, on the basis of the correspondingly quantitatively reduced target velocity (vZ), determines the respective preliminary axis guidance (AF) anew and determines the associated axis time (TA) until the associated axis time (TA) matches the greatest required axis time (TAm).

**3.** Operating method according to claim 1 or 2,

**characterised in that**

- in order to determine the respective preliminary axis guidance (AF), the control facility (4) subdivides the respective preliminary axis guidance (AF) into seven directly successive phases, wherein

  -- each of the successive phases has a respective at least non-negative duration (T1 to T7),
  -- in the first phase and in the seventh phase, the jerk (r) is positive or negative, but quantitatively is at a maximum,
  -- in the third phase, the jerk (r) is the inverse of the jerk (r) in the first phase and, in the fifth phase, the jerk (r) is the inverse of the jerk (r) in the seventh phase,
  -- in the second and sixth phase, the jerk (r) is 0,
  -- in the fourth phase, the jerk (r) and the acceleration (a) are 0, and
  -- the velocity (v) in the fourth phase is the target velocity (vZ),

- **in that** the control facility (4) sets the target velocity (vZ) successively with positive and negative signs, to the maximum permissible value (vmax),
- **in that**, for the respective value of the target velocity (vZ), the control facility (4)

  -- determines the associated sections of the respective preliminary axis guidance (AF) for the first, second and third phase, so that at the end of the third phase, the acceleration (a) is 0 and the velocity (v) is equal to the respective target velocity (vZ),
  -- determines the associated sections of the respective preliminary axis guidance (AF) for the fifth, sixth and seventh phase, so that at the beginning of the fifth phase, the acceleration (a) is 0 and the velocity (v) is equal to the respective target velocity (vZ),
  -- tests whether, in view of the determined first to third phase and the determined fifth to seventh phase, a theoretical duration (T4) of the fourth phase is greater than 0 or equal to 0,
  -- if so, adopts the sections of the respective preliminary axis guidance (AF) for the first to third and fifth to seventh phase and, for the fourth phase, adopts the determined theoretical duration (T4) as the duration (T4),
  -- if not so, sets the duration (T4) of the fourth phase to 0 so that, as a result, the third phase and the fifth phase directly adjoin one another, and furthermore the control facility reduces the value of the target velocity (vZ) and repeats the determination of the respective preliminary axis guidance (AF) for the first, second and third phase and for the fifth, sixth and seventh phase with the correspondingly modified value of the target velocity (vZ) until either the third and the fifth phase continuously transition in location (x), velocity (v) and acceleration (a) into one another or the control facility (4) determines that for the respective sign of the target velocity (vZ), a preliminary axis guidance (AF) is not determinable.

**4.** Operating method according to one of the above claims,
c**haracterised in that**

- a permissible region in the space defined by the possible movement ranges of the axes (1), within which the movement guidance determined by the control facility must take place is known to the control facility (4),
- in that the control facility (4) tests whether a movement guidance based exclusively upon the end (E1) of a respective path section (B1) and the beginning (A2) of the respective directly subsequent path section (B2) would take place within the permissible region,
- in that, if so, the control facility (4) determines the movement guidance according to one of claims 1 to 4, and
- in that, if not so, the control facility (4) subdivides the movement guidance, by specifying intermediate points (P1, P2) to be approached, into a plurality of directly successive submovements that are continuous in location (x), velocity (v) and acceleration (a) and limited in velocity (v), acceleration (a) and jerk (r), and
- in that the control facility (4) determines the submovements just like a respective movement guidance in the context of claims 1 to 4 from the beginning of the respective subregion to the end of the respective subregion.

**5.** Operating method according to claim 4,
**characterised in that**
in at least one of the submovements, at least one of the axes (1) has both at the beginning and also at the end of this submovement a velocity (v) differing from 0 and/or an acceleration (a) differing from 0.

**6.** Operating method according to one of the above claims,
**characterised in that**

the beginnings (A1 to A3) and the ends (E1 to E3) of the path sections (B1 to B3) are specified to the control facility (4) as such and/or **in that** the control facility (4) independently determines the beginnings (A1 to A3) and/or the ends (E1 to E3) of the path sections (B1 to B3) .

**7.** Operating method according to one of the above claims,
**characterised in that**
the control facility (4) carries out the operating method online.

**8.** Control program for a control facility (4), wherein the control program has machine code (6) that is executable by the control facility (4), wherein the execution of the machine code (6) by the control facility (4) causes the control facility (4) to operate a machine which has a plurality of position-controlled axes (1) which cause, in their entirety, a displacement movement of a first element (2) of the machine relative to a second element (3) of the machine according to an operating method according to one of claims 1 to 7.

**9.** Control facility for a machine which has a plurality of position-controlled axes (1) which cause, in their entirety, a displacement movement of a first element (2) of the machine relative to a second element (3) of the machine, wherein the control facility is programmed with a control program (5) according to claim 9, so that the control facility controls the machine according to an operating method according to one of claims 1 to 7.

**10.** Machine which has a plurality of position-controlled axes (1) which cause, in their entirety, a displacement movement of a first element (2) of the machine relative to a second element (3) of the machine, wherein the machine has a control facility (4) according to claim 9 which controls the machine according to an operating method according to one of claims 1 to 7.

## Revendications

**1.** Procédé pour faire fonctionner une machine, qui a une pluralité d'axes (1) réglés en position qui, dans leur ensemble, provoquent un mouvement de déplacement d'un premier élément (2) de la machine par rapport à un deuxième élément (3) de la machine,

- dans lequel le dispositif (4) de commande commande les axes (1) de la machine, de manière à ce que le premier élément (2) de la machine parcourt, par rapport au deuxième élément (3) de la machine séquentiellement les uns après les autres plusieurs tronçons (B1 à B3) déterminés à l'avance avec une courbe de vitesse respective définie pour le tronçon (B1 à B3) respectif et avec une courbe d'accélération respective définie pour le tronçon (B1 à B3) respectif défini par la courbe de vitesse respective,
- dans lequel les tronçons (B1 à B3) ont chacun un début (A1 à A3) et une fin (E1 à E3) et la fin (E1) d'un tronçon (B1) respectif et le début (A2) du tronçon (B2) respectif suivant immédiatement se distinguent par la position d'au moins l'un des axes (1) réglé en position,

**caractérisé**
**en ce que** ne sont connus du dispositif (4) de commande, pour un guidage en déplacement d'une fin (E1) d'un tronçon (B1) respectif au début (A2) du tronçon (B2) suivant immédiatement, d'abord que la fin (E1) du tronçon (B1) respectif et le début (A2) du tronçon (B2) suivant immédiatement, mais non un parcours à parcourir de la fin (E1) d'un tronçon (B1) respectif au début (A2) du tronçon (B2) suivant immédiatement, en ce que le dispositif (4) de commande détermine, pour les axes (1) un guidage (AF') d'axe respectif définitif, en ce que l'ensemble des guidages (AF') d'axe définitifs correspond au guidage de déplacement et en ce que les guidages (AF') d'axe définitif sont accordés les uns aux autres, de manière à ce que le déplacement du premier élément (2) de la machine par rapport au deuxième élément (3) de la machine soit, dans le guidage de déplacement déterminé, continu en optimisation dans le temps, en emplacement (x), en vitesse (v) et en accélération (a) et soit limité, en vitesse (v), en accélération (a) et en suraccélération (r), se transforme à la fin (E1) du tronçon (B1) respectif d'une manière continue en emplacement (x), en vitesse (v) et en accélération (a) en le guidage de déplacement déterminé et de manière à ce que le guidage de déplacement déterminé se transforme au début (A2) du tronçon (B2) suivant immédiatement d'une manière continue en emplacement (x), en vitesse (v) et en accélération (a) dans le tronçon (B2) suivant immédiatement, dans lequel le dispositif (4) de commande, pour la détermination du guidage de déplacement,

- détermine d'abord pour les axes (1), indépendamment les uns des autres, un guidage (AF) d'axe provisoire continu en optimisation dans le temps, en emplacement (x), en vitesse (v) et en accélération (a) et limité en vitesse (v), en accélération (a) et en suraccélération (r) de la fin (E1) d'un tronçon (B1) respectif au début (A2) du tronçon (B2) suivant immédiatement, de sorte que - rapporté à l'axe (1) concerné respectivement - le déplacement du premier élément (2) de la machine par rapport au deuxième élément (3) de la machine à la fin (E1) du tronçon (B1) respectif, se transforme en continu en emplacement (x), en vitesse (v) et en accélération (a) en le guidage (AF) d'axe provisoire déterminé et de manière à ce que le guidage (AF) d'axe provisoire déterminé se transforme au début (A2) du tronçon (B2) suivant immédiatement en continu, en emplacement (x), en vitesse (v) et en accélération (a) dans le tronçon (B2) suivant immédiatement,
- détermine pour les axes (1) le temps (TA) d'axe nécessaire pour le guidage (AF) d'axe provisoire respectif,
- prend en charge sans modification, comme guidage (AF') d'axe définitif, le guidage (AF) d'axe provisoire ayant le temps (TAm) d'axe nécessaire le plus grand pour cet axe (1),
- pour les axes (1) ayant un temps (TAm) d'axe nécessaire plus petit que le plus grand, modifie le guidage (AF) d'axe provisoire respectif, de manière à ce que la continuité en emplacement (x), en vitesse (v) et en accélération (a) reste conservée et de manière à ce que le temps (TA) d'axe associé coïncide avec le temps (TAm) d'axe nécessaire le plus grand et prend en charge les guidages (AF) d'axe modifiés ainsi déterminés comme guidage (AF') d'axe définitifs .

**2.** Procédé suivant la revendication 1,
**caractérisé**
**en ce que** le dispositif (4) de commande réduit, pour modifier le guidage (AF) d'axe provisoire respectif, la valeur absolue de la vitesse (vZ) cible et, sur la base de la vitesse (vZ) cible réduite correspondante en valeur absolue, détermine à nouveau le guidage (AF) d'axe provisoire respectif et le temps (TA) d'axe associé jusqu'à ce que le temps (TA) d'axe associé coïncide avec le temps (TAm) d'axe nécessaire le plus grand .

**3.** Procédé suivant la revendication 1 ou 2,
**caractérisé**

- **en ce que** le dispositif (4) de commande subdivise, pour déterminer le guidage (AF) d'axe provisoire respectif, le guidage (AF) d'axe provisoire respectif en sept phases se succédant directement, dans lequel :

  --chacune des phases successives a au moins une durée (T1 à T7) respective non négative,
  --dans la première phase et dans la septième phase, la suraccélération (r) est positive ou négative, mais en valeur absolue maximum,
  --dans la troisième phase, la suraccélération (r) est inverse de la suraccélération (r) dans la première phase et dans la cinquième phase la suraccélération (r) est inverse de la suraccélération (r) dans la septième phase,
  --dans la deuxième et la sixième phase, la suraccélération (r) est de 0,
  --dans la quatrième phase, la suraccélération (r) et l'accélération (a) sont de 0, et
  --la vitesse (v) dans la quatrième phase est la vitesse (vZ) cible,

- **en ce que** le dispositif (4) de commande fixe la vitesse (vZ) cible l'une après l'autre d'abord avec des signes positifs et négatifs à la valeur (vmax) admissible au maximum,
- **en ce que** le dispositif (4) de commande pour la valeur respective de la vitesse (vZ) cible

  --détermine les tronçons associés du guidage (AF) d'axe provisoire respectif pour les première, deuxième et troisième phases, de manière à ce qu'à la fin de la troisième phase, l'accélération (a) soit de 0 et de manière à ce que la vitesse (v) soit égale à la vitesse (vZ) cible respective,
  --détermine les tronçons associés du guidage (AF) d'axe provisoire respectif pour les cinquième, sixième et septième phases, de manière à ce qu'au début de la cinquième phase l'accélération (a) soit de 0 et la vitesse (v) soit égale à la vitesse (vZ) cible respective,
  --contrôle si, eu égard aux première à troisième phases déterminées et aux cinquième à septième phases déterminées, une durée (T4) théorique de la quatrième phase est plus grande que 0 ou égale à 0,
  --dans l'affirmative, prend en charge les tronçons du guidage (AF)d'axe provisoire respectif pour les première à troisième et cinquième à septième phases et prend en charge, comme durée (T4), la durée (T4) théorique déterminée pour la quatrième phase,
  --dans la négative, fixe la durée (T4) de la quatrième phase à 0, de manière à aboutir à ce que la troisième phase et la cinquième phase soient directement voisines et réduit en outre la valeur absolue de la vitesse (vZ) cible et reprend la détermination du guidage (AF) d'axe provisoire respectif pour les première, deuxième et troisième phases, ainsi que pour les cinquième, sixième et septième phases, avec la valeur modifiée correspondante de la vitesse (vZ) cible jusqu'à ce que, ou bien la troisième et la cinquième phase se transforment l'une dans l'autre d'une manière continue en emplacement (x), en vitesse (v) et en accélération (a), ou bien le dispositif (4) de commande constate que, pour le signe respectif de la vitesse (vZ) cible, un guidage (AF) d'axe provisoire ne peut pas être déterminé .

**4.** Procédé suivant l'une des revendications précédentes, **caractérisé**

- **en ce qu'**il est connu du dispositif (4) de commande, dans l'espace délimité dans les régions de déplacement possibles des axes (1), une région admissible dans laquelle le guidage de déplacement qu'il a déterminé doit s'effectuer,
- **en ce que** le dispositif (4) de commande contrôle si un guidage de déplacement reposant exclusivement sur la fin (E1) d'un tronçon (B1) respectif et le début (A2) du tronçon (B2) suivant immédiatement s'effectuerait dans la région admissible,
- **en ce que**, dans l'affirmative, le dispositif (4) de commande détermine le guidage de déplacement conformément à l'une des revendications 1 à 4, et
- **en ce que**, dans la négative, le dispositif (4) de commande subdivise le guidage de déplacement par fixation de points (P1, P2) intermédiaires de passage, en plusieurs déplacements partiels se succédant immédiatement continus en emplacement (x), en vitesse (v) et en accélération (a), ainsi que limités en vitesse (v), en accélération (a) et en suraccélération (r) et
- **en ce que** le dispositif (4) de commande détermine les déplacements partiels, ainsi qu'un guidage de déplacement respectif au sens des revendications 1 à 4 du début de la région partielle respective à la fin de la région partielle respective .

**5.** Procédé suivant la revendication 4,
**caractérisé**
**en ce que**, pour au moins l'un des déplacements partiels, au moins l'un des axes (1) a tant au début qu'à la fin de ce déplacement partiel, une vitesse (v) différente de 0 et/ou une accélération (a) différente de 0 .

**6.** Procédé suivant l'une des revendications précédentes, **caractérisé**
**en ce que** les débuts (A1 à A3) et les fins (E1 à E3) des tronçons (B1 à B3) sont donnés en tant que tel au dispositif (4) de commande et/ou en ce que le dispositif (4) de commande détermine automatiquement les débuts (A1 à A3) et/ou les fins (E1 à E3) des tronçons (B1 à B3) .

**7.** Procédé suivant l'une des revendications précédentes, **caractérisé**
**en ce que** le dispositif (4) de commande effectue le procédé de fonctionnement en ligne .

**8.** Programme de commande d'un dispositif (4) de commande, dans lequel le programme de commande a un code (6) machine qui peut être élaboré par le dispositif (4) de commande, dans lequel l'élaboration du code (6) machine par le dispositif (4) de commande fait que le dispositif (4) de commande commande une machine, qui a une pluralité d'axes (1) réglés en position, qui provoquent dans leur ensemble un mouvement de déplacement d'un premier élément (2) de la machine par rapport à un deuxième élément (3) de la machine, suivant un procédé de fonctionnement suivant l'une des revendications 1 à 7 .

**9.** Dispositif de commande d'une machine, qui a une pluralité d'axes (1) réglés en position, qui provoquent dans leur ensemble un mouvement de déplacement d'un premier élément (2) de la machine par rapport à une deuxième élément (3) de la machine, dans lequel le dispositif de commande est programmé par un programme (5) de commande suivant la revendication 9, de manière à ce que le dispositif de commande commande la machine suivant un procédé de fonctionnement suivant l'une des revendications 1 à 7 .

**10.** Machine, qui a une pluralité d'axes (1) réglés en position, qui provoquent dans leur ensemble un mouvement de déplacement d'un premier élément (2) par rapport à un deuxième élément (3) de la machine, la machine ayant un dispositif (4) de commande suivant la revendication 9, qui commande les axes (1) de la machine suivant un procédé de fonctionnement suivant l'une des revendications 1 à 7 .

FIG 1

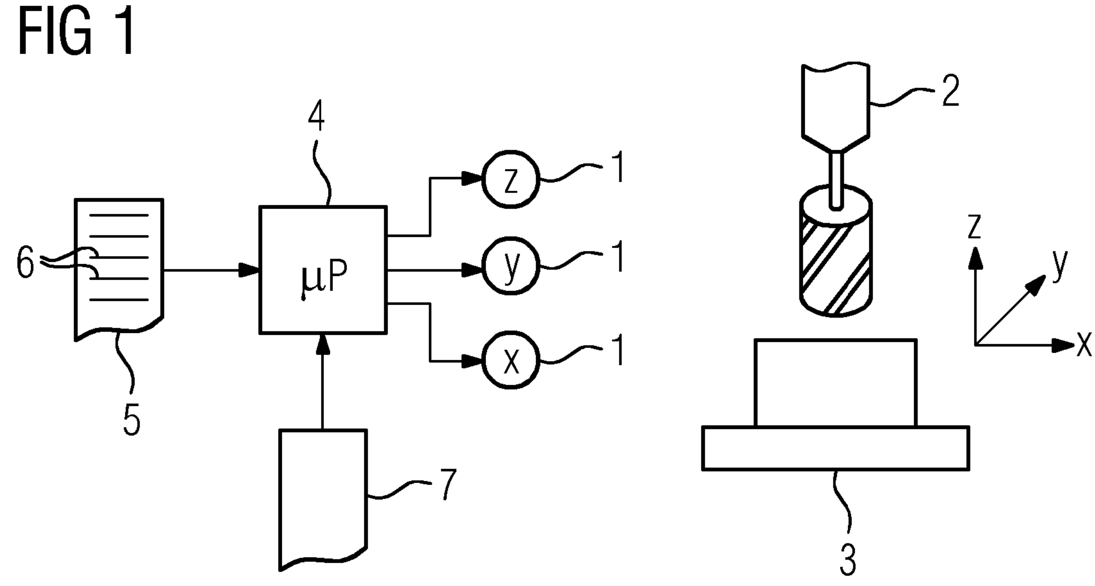
4
μP
6
5
7
z
y
x
1
1
1
2
3
z
y
x

FIG 2

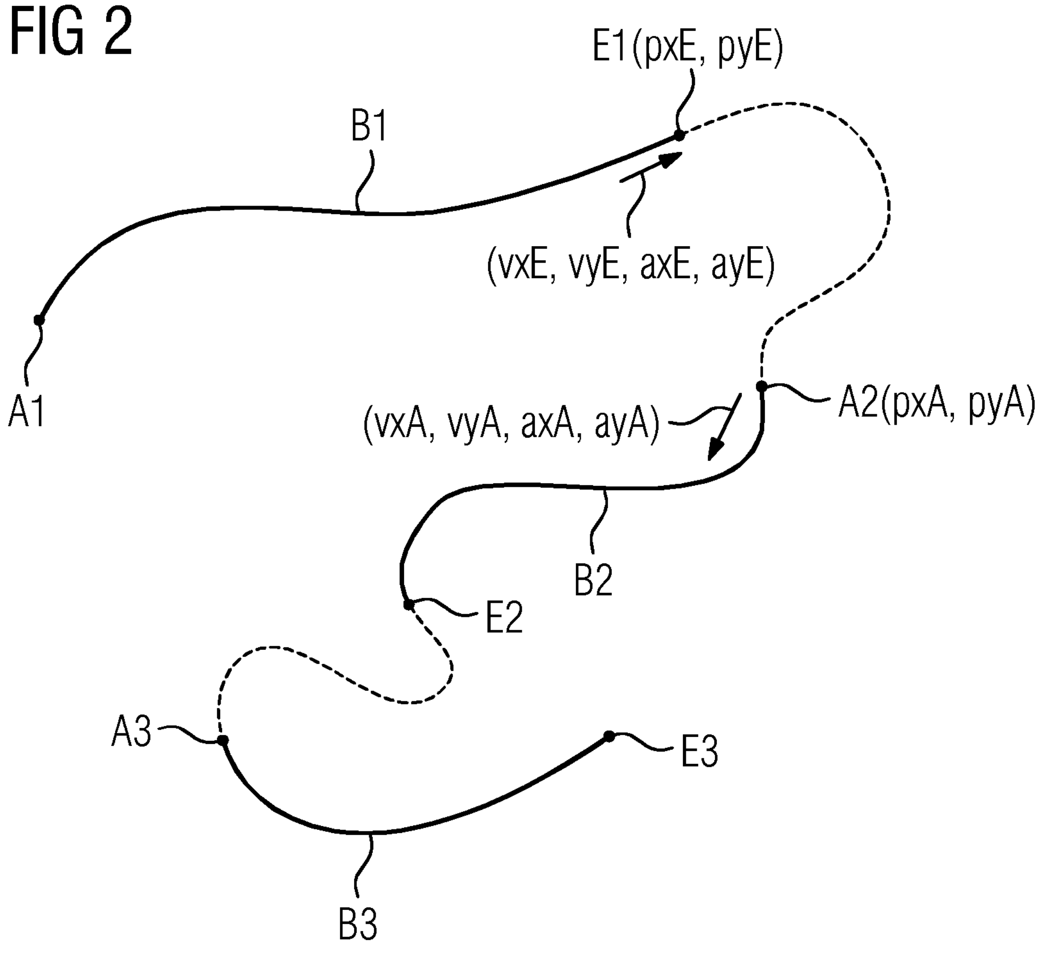
E1(pxE, pyE)
B1
(vxE, vyE, axE, ayE)
A1
(vxA, vyA, axA, ayA)
A2(pxA, pyA)
B2
E2
A3
E3
B3

FIG 3

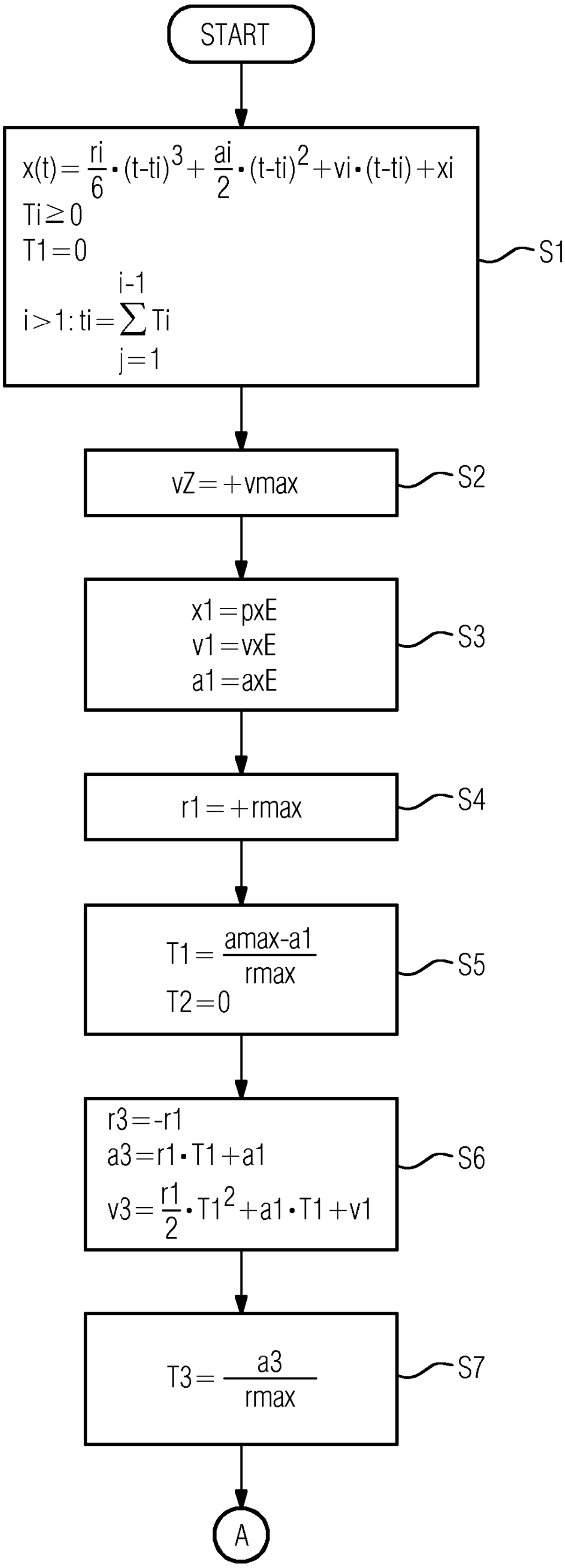
START
x(t)=ri/6·(t-ti)^3+ai/2·(t-ti)^2+vi·(t-ti)+xi
Ti≥0
T1=0
i>1: ti=∑ j=1 i-1 Ti
S1
vZ=+vmax
S2
x1=pxE
v1=vxE
a1=axE
S3
r1=+rmax
S4
T1=amax-a1/rmax
T2=0
S5
r3=-r1
a3=r1·T1+a1
v3=r1/2·T1^2+a1·T1+v1
S6
T3=a3/rmax
S7
A

FIG 4

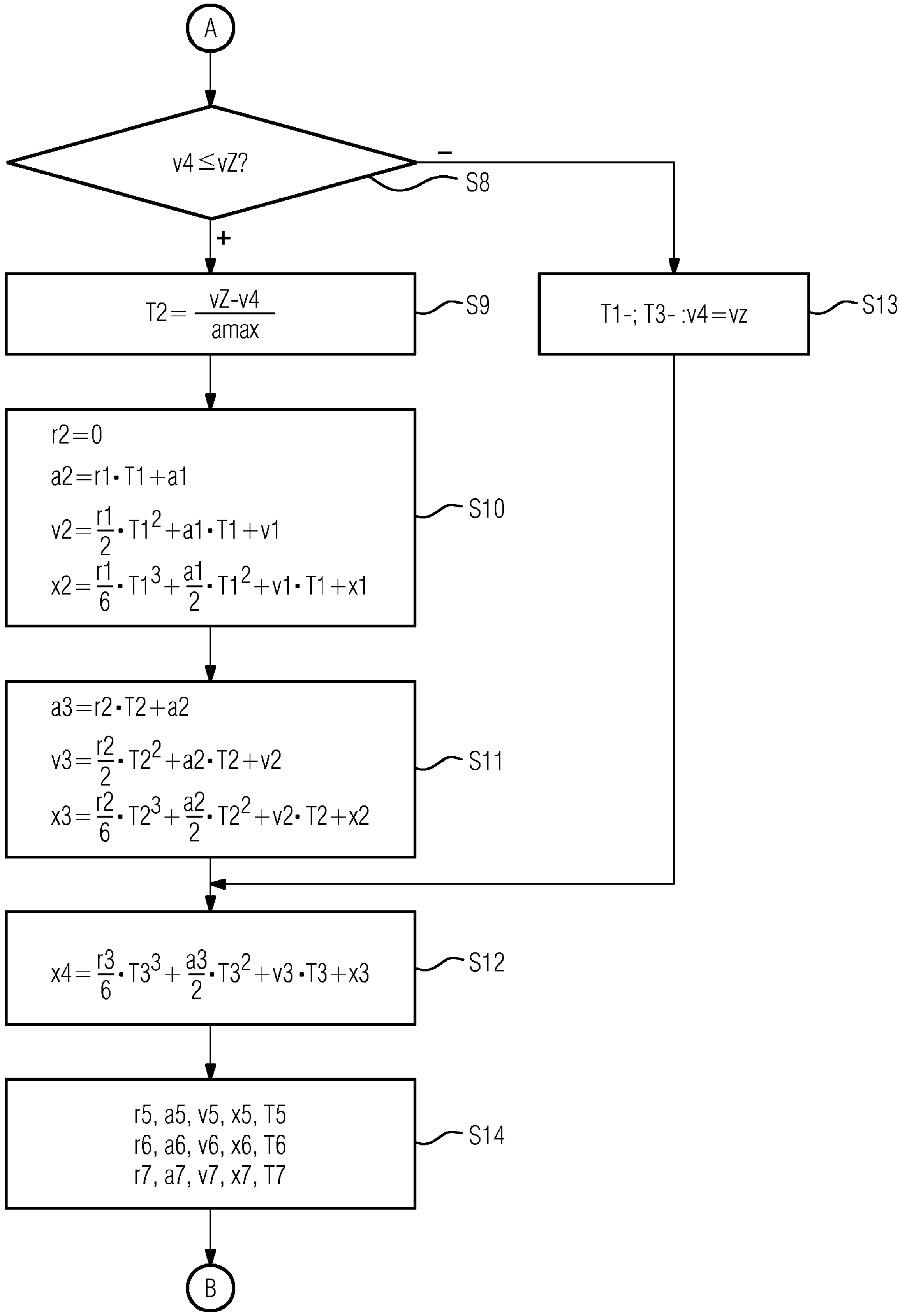
A
v4 ≤ vZ?
S8
−
+
T2 = (vZ-v4)/amax
S9
T1-; T3- :v4=vz
S13
r2=0
a2=r1·T1+a1
v2=r1/2·T1^2+a1·T1+v1
x2=r1/6·T1^3+a1/2·T1^2+v1·T1+x1
S10
a3=r2·T2+a2
v3=r2/2·T2^2+a2·T2+v2
x3=r2/6·T2^3+a2/2·T2^2+v2·T2+x2
S11
x4=r3/6·T3^3+a3/2·T3^2+v3·T3+x3
S12
r5, a5, v5, x5, T5
r6, a6, v6, x6, T6
r7, a7, v7, x7, T7
S14
B

FIG 5

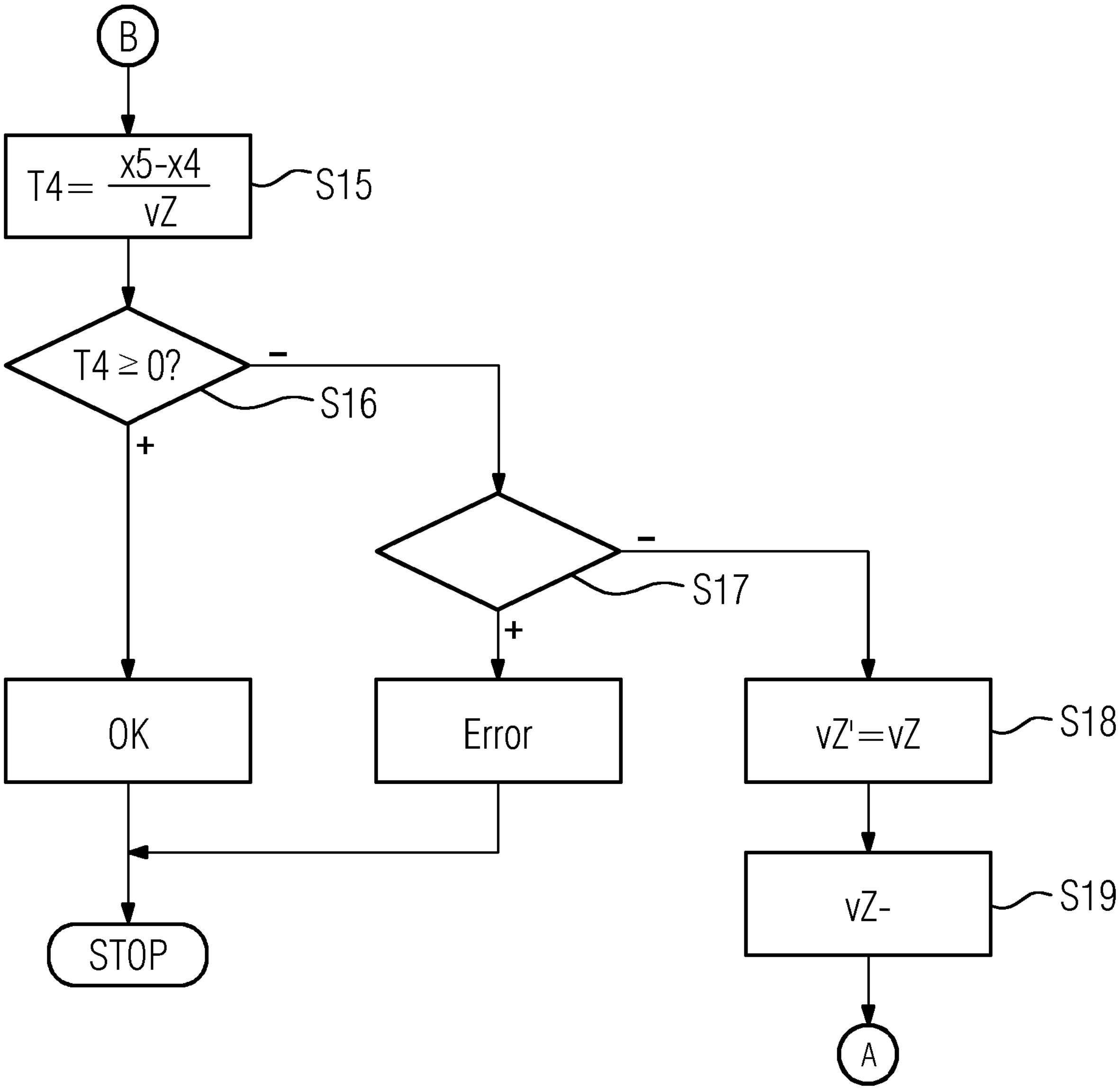

FIG 6

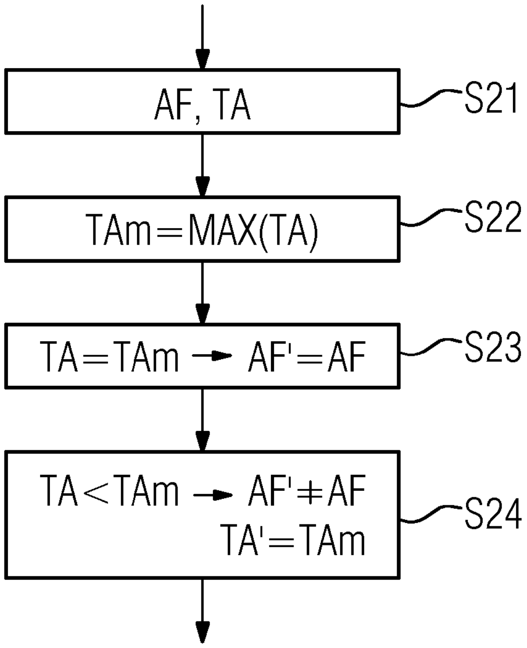
AF, TA
S21
TAm=MAX(TA)
S22
TA=TAm → AF'=AF
S23
TA<TAm → AF'≠AF
TA'=TAm
S24

FIG 7

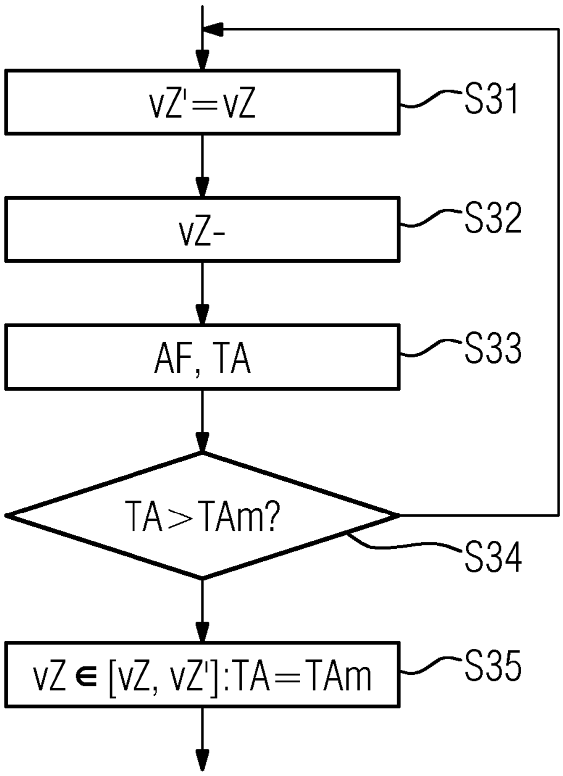
vZ'=vZ
S31
vZ-
S32
AF, TA
S33
TA>TAm?
S34
vZ ∈ [vZ, vZ']:TA=TAm
S35

FIG 8

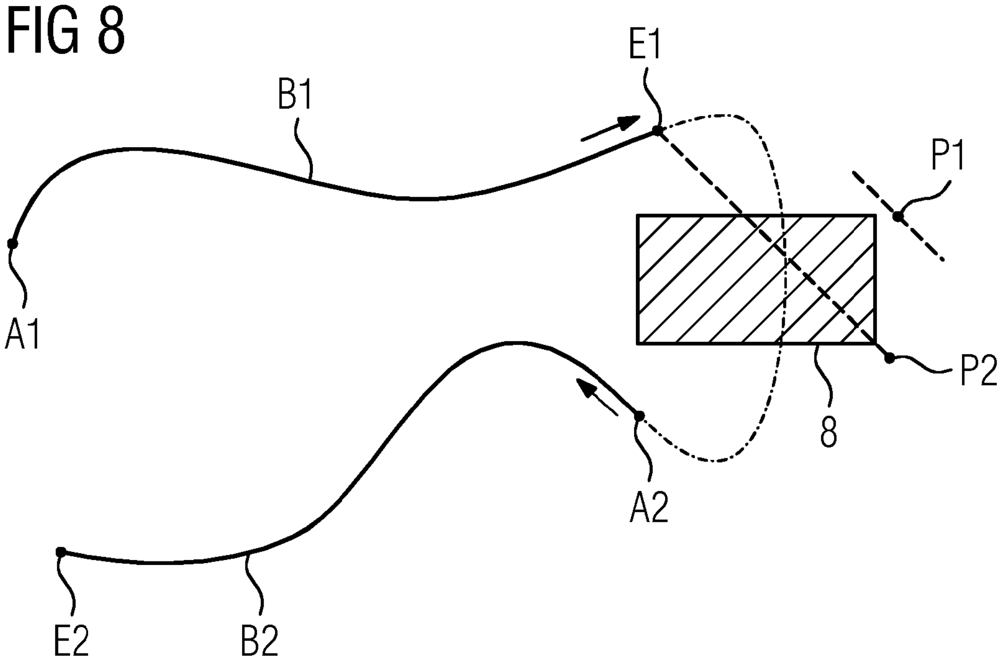
E1
B1
P1
A1
P2
8
A2
E2
B2

FIG 9

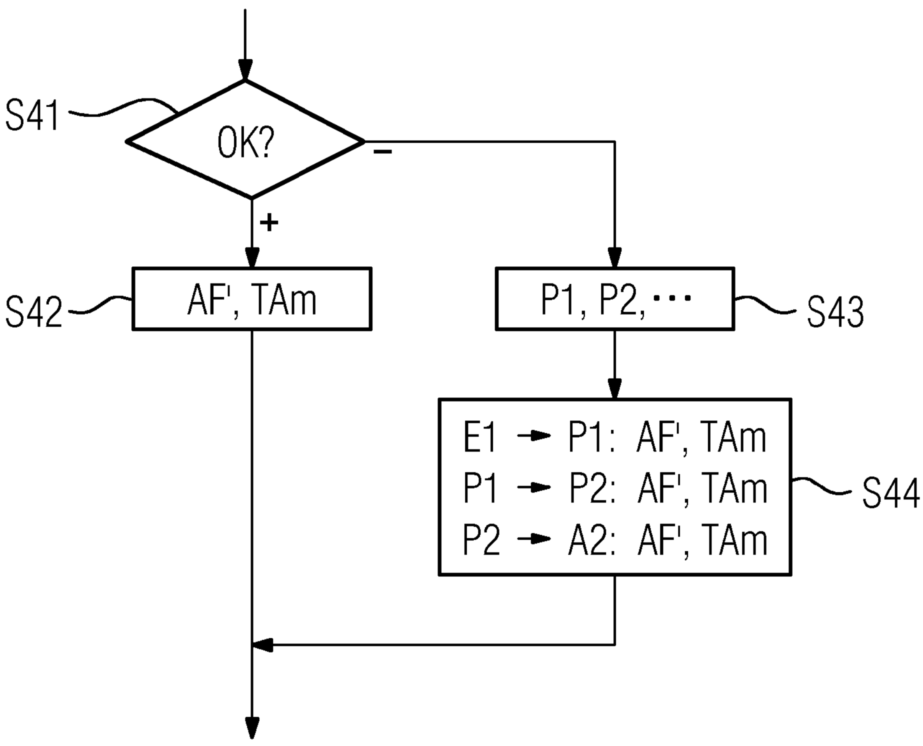
S41
OK?
–
+
S42
AF', TAm
P1, P2, ···
S43
E1 → P1: AF', TAm
P1 → P2: AF', TAm
P2 → A2: AF', TAm
S44

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102010013525 A1
- DE 102009024130 A1
- DE 102010025271 A1


### In der Beschreibung aufgeführte Nicht-Patentliteratur


- **VON ROBERT HASCHKE et al.** *On-Line Planning of Time-Optimal, Jerk-Limited Trajectories,* 17. August 2018, https://ni.www.techfak.uni-biele-feld.de/files/HaschkeWeitnauerRitter08-OPT.pdf